(19)

Europäisches Patentamt

European Patent Office

Office européen des brevets

(11)  **EP 4 647 739 A1**

(12)  **EUROPEAN PATENT APPLICATION**

(43) Date of publication:
**12.11.2025   Bulletin 2025/46**

(51) International Patent Classification (IPC):
**G01N 1/31** (2006.01)          **G01N 1/30** (2006.01)
**G01N 35/10** (2006.01)

(21) Application number: **24382503.1**

(22) Date of filing: **08.05.2024**

(52) Cooperative Patent Classification (CPC):
**G01N 1/31; G01N 1/30; G01N 35/1002**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Fundación para la Investigación Biomédica del
  Hospital Gregorio Marañón (FIBHGM)**
  **28007 Madrid (ES)**
• **Plane Light, S.L**
  **28047 Madrid (ES)**

(72) Inventors:
• **Ekizoglou, Nikolaos**
  **28053 Madrid (ES)**
• **Redl López, Isabel**
  **28053 Madrid (ES)**
• **Desco Menéndez, Manuel**
  **28007 Madrid (ES)**
• **Gómez Gaviro, María Victoria**
  **28007 Madrid (ES)**

(74) Representative: **Hoffmann Eitle**
  **Hoffmann Eitle S.L.U.**
  **Paseo de la Castellana 140, 3a planta**
  **Edificio LIMA**
  **28046 Madrid (ES)**

(54)  **TISSUE CLEARING SYSTEM AND METHOD THEREOF**

(57)    The present disclosure relates to a system and method for the preparation and clearing of biological tissue samples. The system comprises a sample subsystem equipped with one or more containers for holding samples, alongside a reagent subsystem containing one or more containers for various specialized reagents. These reagents comprise at least a Lipid Extraction Reagent (LER) and preferably one of a Refractive Index Reagent (RIR), a Bleaching Reagent (BR), a Labelling Reagent (LR), a Calcium Removal Reagent (CRR), and a Fixative Reagent (FR). The sample and reagent subsystems are interconnected through one or more multi-channel subsystems, facilitating efficient fluid communication. Additionally, the system preferably integrates a waste disposal unit, enhancing operational convenience and safety. The method for sample clearing comprises a bleaching step which comprises contacting the sample with hydrogen peroxide ($H_2O_2$), and/or a clearing step that comprises contacting the sample with 2,2'-thiodiethanol (TDE).

Figure 1

EP 4 647 739 A1

## Description

## Technical field of the invention

The present invention pertains to the field of biochemical analysis and sample preparation technology, specifically to systems and methods for preparing biological samples for microscopic examination or analysis. More specifically, it relates to an automated system for large biological tissue clearing, bleaching and/or labelling and a method thereof.

## Background of the invention

The behaviour and functionality of biological tissues and organs are profoundly influenced by their three-dimensional structure. Information regarding this spatial arrangement is crucial for understanding the underlying mechanisms of physiological processes, whether they occur naturally or are induced by disease or other conditions.

Traditional microscopic methods, however, have traditionally relied on the sectioning of biological samples into thin slices. While this approach allows for the penetration of light and the application of microscopy, it significantly compromises the 3-dimensional integrity of the sample. Artefacts introduced during the sectioning process further increase the processing time and impede the recovery of structural information, crucial for understanding physiological processes and pathological conditions.

On the other hand, optical tissue clearing techniques have been developed to address these limitations. By rendering biological samples transparent, tissue clearing allows for light penetration and enables the visualization of entire samples with their structural information intact. These techniques have evolved from solvent-based to aqueous-based methods, the latter of which are preferred for their lower toxicity and reduced damage to samples.

Despite these advancements, the state of the art in tissue clearing and sample preparation involves a manual and time-consuming multi-step process that generally comprises fixation, decalcification, bleaching, lipid removal, labelling, and refractive index homogenization. These steps are convenient to maintain the molecular content and structure of the sample, increase transparency, and allow for the labelling of specific structures. There is a huge diversity of protocols available for carrying out these steps, which attests to the complexity and specificity required for optimal sample preparation. However, the execution of these protocols is predominantly manual, and presents several challenges. The manual nature of these processes introduces variability in results due to differences in user skill and experience, which concomitantly leads to low repeatability. Additionally, these procedures are very time-consuming, requiring significant labour from highly qualified personnel, which could be better allocated to more complex analytical tasks. The labour-intensive nature of these methods also imposes a considerable time burden on researchers, limiting the throughput of experiments and delaying the progress of scientific discovery. Furthermore, the manual handling of samples and reagents increases the risk of error and exposure to potentially hazardous chemicals, posing safety concerns. These limitations, in turn, render the process expensive, time consuming and dependant on the skills of seasoned experts.

Given the critical role of large tissue clearing and sample preparation in microscopic analysis, there is a pressing need for a solution that can overcome the above-mentioned shortcomings. Such a solution should provide reliable, consistent results regardless of user experience, improve repeatability by standardizing protocols, and increase efficiency by freeing up researcher time for more critical analytical work. Additionally, a satisfactory solution should enhance safety by minimizing direct handling of chemicals and samples, and reduce costs. Not only that, but it is also needed in the field a process that allows for bulk large tissue clearing, wherein each sample can be processed with the same protocol or with an a *la carte* protocol, allowing to quickly compare and optimize procedures, time employed and quantities of the reagents employed. The development of a solution capable of bulk treating samples, of optimizing time and reagents quantities, as well as capable of treating the samples in an standardized and repeatable way is currently a great need in the field of large tissue clearing. This solution should be adaptable to different sample sizes and types, capable of handling various reagents and solvents, and designed to operate unattended, thereby addressing the current limitations and significantly advancing the field of biological microscopy.

Furthermore, there is also a pressing need for a clearing methodology that simplifies the process, and that can be applied to most types of large tissue sample, while reducing time and, therefore, costs, therefore standardizing one solution among the huge amount of options available.

## Summary of the invention

Given the relevance of tissue clearing and sample preparation in advancing microscopic analysis, there is an urgent need for a novel solution that addresses the above-mentioned limitations. Such a solution should standardize protocols to ensure consistent and reliable results independent of user skill, enhance safety by reducing direct chemical handling, and improve efficiency. Additionally, it should enable the bulk processing of samples with customizable protocols, optimizing the use of time and reagents.

In this invention, backed up on the examples, we disclose a system and a method that addresses the aforementioned issues and successfully solves them. The system of the invention is an automated system capable of processing and clearing various sample sizes and types, sequentially or simultaneously, individually or in bulk, while optimizing time and reagent use. Furthermore, it can operate unattended, saving precious time for researchers and users. The system of the invention, thus, is the first system capable of performing any of the steps of fixation, decalcification, bleaching, lipid removal, labelling, and refractive index homogenization, alone or in any combination thereof. Such a system allows for standardized sample processing and clearing protocols that are reproducible and do not depend on the skill of the user, while at the same time reducing human error.

A first aspect of the invention discloses a system that comprises a sample subsystem comprising one or more sample containers, a reagent subsystem comprising one or more reagent containers, one or more multi-channel subsystems in fluid communication with the sample subsystem and the reagent subsystem, and, optionally, a waste disposal unit preferably comprised in the sample subsystem, wherein at least one of the one or more reagent containers of the reagent subsystem comprises a Lipid Extraction Reagent (LER) and wherein, if the reagent subsystem comprises more than one reagent containers, optionally at least one further reagent container comprises one of the reagents from the list consisting of: a Fixative Reagent (FR), a Calcium Removal Reagent (CRR), a Bleaching Reagent (BR), a Labelling Reagent (LR) and a Refractive Index Reagent (RIR).

In a preferred embodiment of the first aspect of the invention, the reagent subsystem further comprises one or more reagent containers comprising a RIR.

In a preferred embodiment of the first aspect of the invention, the reagent subsystem further comprises one or more reagent containers comprising a BR.

In a preferred embodiment of the first aspect of the invention, the LER comprised in at least one of the reagent containers (30) of the reagent subsystem (3) comprises or consist of one or more of the reagents from the list consisting of: N,N,N,N-tetrakis(2-hydroxypropyl) ehylenediamine, Urea, Triton X-100, Methanol, Chloroform, Ethanol, Isopropanol, Hexane, Diethyl Ether, Acetone, Dichloromethane, Ethyl Acetate, Petroleum Ether, Toluene, Pyridine, Dioxane, Naphta, Xylene, Cyclohexane, Benzene, Dimethyl Sulfoxide (DMSO), Dimethyl Formamide (DMF), Methyl Ethyl Ketone (MEK), Tetrahydrofuran (THF) and Methyl tert-butyl ether (MTBE), preferably wherein the LER comprises or consists of at least one of N,N,N,N-tetrakis(2-hydroxypropyl)ehylenediamine, Urea and Triton X-100, more preferably wherein the LER comprises or consists of N,N,N,N-tetrakis(2-hydroxypropyl)ehylenediamine, Urea and Triton X-100.

In a more preferred embodiment of the first aspect of the invention, the RIR comprised in at least one of the reagent containers (30) of the reagent subsystem (3) comprises or consist of one or more of the reagents from the list consisting of: 2,2'-thiodiethanol (TDE), Glycerol, n-Butyl Alcohol, Benzyl Alcohol, Benzyl Benzoate and Methyl Salicylate, preferably wherein the RIR comprises or consists of TDE.

In a more preferred embodiment of the first aspect of the invention, the BR comprised in at least one of the reagent containers (30) of the reagent subsystem (3) comprises or consist of one or more of the reagents from the list consisting of: Hydrogen Peroxide ($H_2O_2$), Sodium Hypochlorite (NaClO), Potassium Permanganate ($KMnO_4$), Sodium Borohydride, Oxalic Acid, Formic Acid, Chloral Hydrate, Ethanol, Acetic Acid, Calcium Hypochlorite, Phenol and Hydroquinone, preferably wherein the BR comprises or consists of $H_2O_2$.

In a preferred embodiment of the first aspect of the invention, the one or more multi-channel subsystems comprise a multi-channel reagent selection subsystem in fluid communication with the one or more reagent containers, and wherein the one or more multi-channel subsystems comprise a multi-channel sample selection subsystem in fluid communication with the one or more sample containers.

In a preferred embodiment of the first aspect of the invention, the one or more multi-channel subsystems further comprise a multi-channel connecting subsystem in fluid communication with the multi-channel reagent selection subsystem and with the multi-channel sample selection subsystem.

In a preferred embodiment of the first aspect of the invention, the system further comprises a solvent reservoir in fluid communication with the multi-channel connecting subsystem, preferably wherein the solvent reservoir is at room temperature.

In a preferred embodiment of the first aspect of the invention, the system further comprises a fluid pump, preferably wherein said fluid pump is in fluid communication with the solvent reservoir or with the multi-channel connecting subsystem.

In a preferred embodiment of the first aspect of the invention, the system further comprises a temperature control unit for the sample subsystem, wherein the sample subsystem is preferably thermally isolated and/or encased, more preferably wherein the sample subsystem temperature is kept at about 37 degrees Celsius, and wherein the system further comprises a temperature control unit for the reagent subsystem, wherein the re-agent subsystem is preferably thermally isolated and/or encased, more preferably wherein the re-agent subsystem temperature is kept at about 4 degrees Celsius.

In a preferred embodiment of the first aspect of the invention, the system further comprises a control unit with a processor and a memory comprising processor-executable instructions to operate the system, wherein the multi-channel subsystems are preferably controlled through level signal control or pulse signal control.

In some embodiments, the system of the invention preferably comprises 2,2'-thiodiethanol (TDE) as a dynamic Refractive Index (RI)-matching reagent due to its numerous advantages to use in an automated system such as low viscosity, fast application, adjustable refractive index and long term storage and reusability.

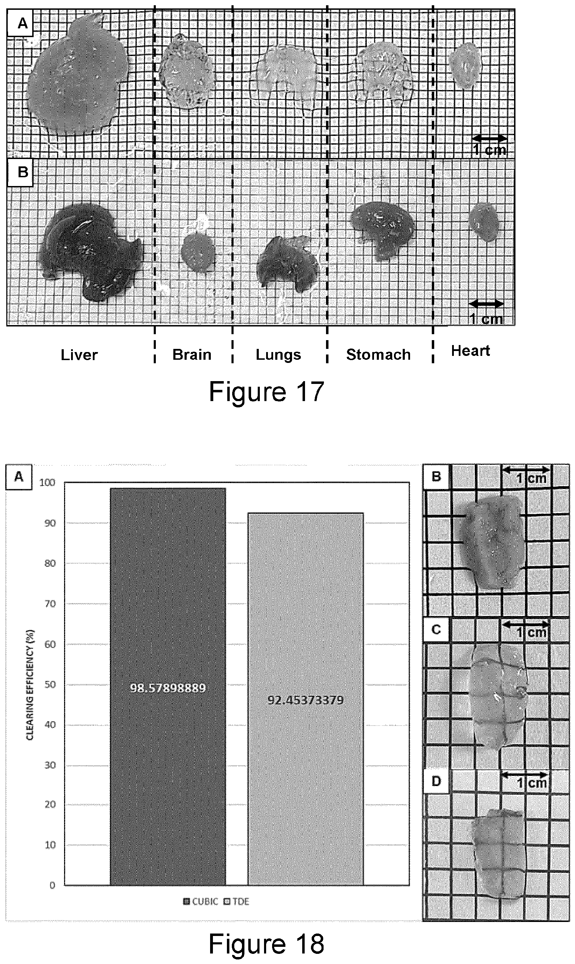

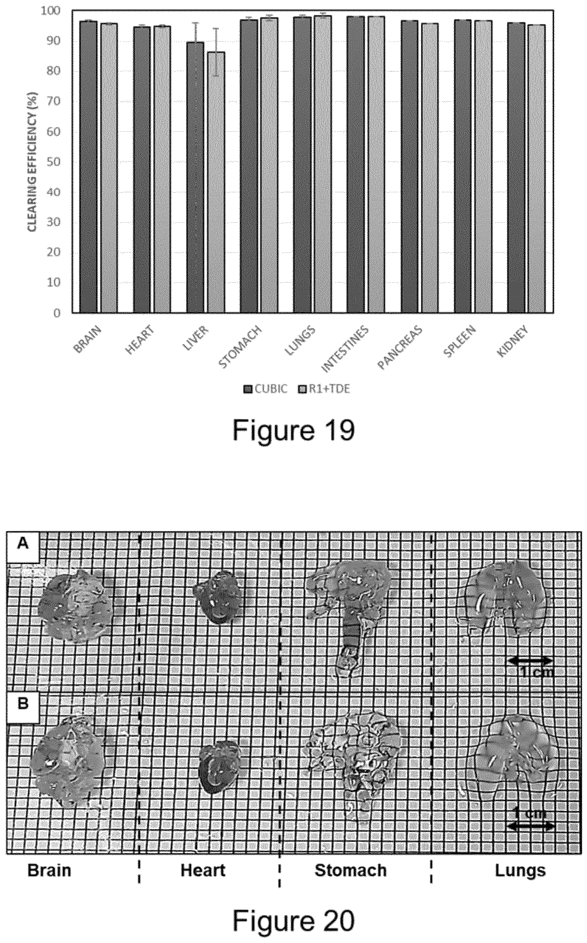

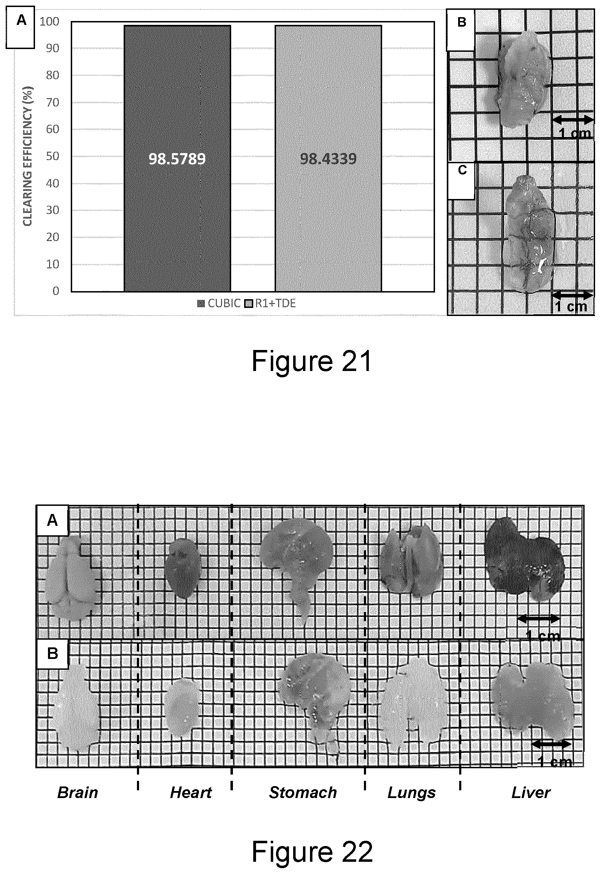

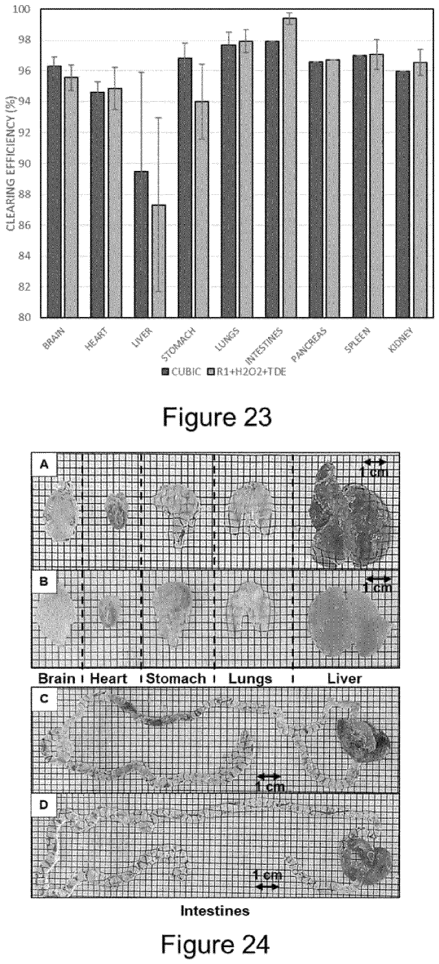

A second aspect of the invention discloses a clearing methodology that simplifies the current alternatives and reduces the time required. Such a method, backed up on the examples, demonstrates that it can clarify samples with a simple refractive index homogenization step comprising one refractive index reagent (figure 17). By adding a standard lipid extraction step, the clarification is much more pronounced and better transparency is observed (see figure 20). Furthermore, by adding a simple bleaching step, the transparency obtained is at the level of the state of the art or even better (see figure 24), wherein the bleaching step is a very simple step that effectively removes pigmentation in the sample (see figure 22). Therefore, an alternative to current methods that reduces manyfold the time needed to clarify samples, as well as reduces the complexity of the process, is disclosed herein.

A third aspect of the invention discloses a kit of parts, wherein a first component of the kit comprises a sample subsystem comprising one or more sample containers; a reagent subsystem configured to accommodate one or more reagent containers; one or more multi-channel subsystems in fluid communication with the sample subsystem and the reagent subsystem; and optionally, a waste disposal unit (14), preferably comprised in the sample subsystem (1). Wherein a second component of the kit comprises the one or more reagent containers, wherein said reagent containers comprise at least a Lipid Extraction Reagent (LER) and, optionally, the reagent subsystem further comprises one or more reagent containers (30) comprising each one of the reagents from the list consisting of: a Fixative Reagent (FR), a Calcium Removal Reagent (CRR), a Bleaching Reagent (BR), a Labelling Reagent (LR) and a Refractive Index Reagent (RIR).

A fourth aspect of the invention discloses a computer executable program capable of operating a system for tissue sample clearing according to one or more embodiments of the invention. Wherein the computer executable program comprises processor readable instructions which, when the program is executed by a processor, cause the processor to operate one or more embodiments of the system and/or the kit of parts of the invention.

A fifth aspect of the invention discloses the in vitro use of a system for tissue sample clearing according to one or more embodiments of the invention. Preferably wherein the system comprises a sample subsystem comprising one or more sample containers; a reagent subsystem suitable for accommodating one or more reagent containers; one or more multi-channel subsystems in fluid communication with the sample subsystem and the reagent subsystem; and, optionally, a waste disposal unit, preferably comprised in the sample subsystem.

**Brief description of the drawings**

To enable a better understanding of the present disclosure, and to show how the present disclosure may be carried out, reference will now be made, by way of example only, to the accompanying schematic drawings, wherein:

Figure 1 shows a system for treating biological tissue samples according to one or more embodiments of the invention.

Figure 2 shows a system for batch treating biological tissue samples according to one or more embodiments of the invention.

Figure 3 shows a system for treating biological tissue samples with a multi-channel mechanism suitable for or configured to fluidly connect the reagents to the sample containers and another multi-channel mechanism suitable for or configured to fluidly connect the sample containers to a sample waste disposal unit, according to one or more embodiments of the invention.

Figure 4 shows a multichannel reagent selection subsystem comprising two multi-channel mechanism according to one or more embodiments of the invention.

Figure 5 shows a sample container according to one or more embodiments of the invention.

Figure 6 shows a multichannel connector according to one or more embodiments of the invention.

Figure 7 shows a combination of multichannel connectors according to one or more embodiments of the invention.

Figure 8 shows a table with clearing methods that can be used with a system according to one or more embodiments of the invention.

Figure 9 shows a table with clearing methods for plants that can be used with a system according to one or more embodiments of the invention.

Figure 10 shows a table with fluorescence dye labelling methods that can be used with a system according to one or more embodiments of the invention.

Figure 11 shows a table with bleaching/decolorization methods that can be used with a system according to one or more embodiments of the invention.

Figure 12 shows an example of a timeline table summarizing the steps that can be performed in a system according to figure 1 to add reagent from channel 1 to sample compartment 1, wait for a desired period of time for the reaction and then remove the reagent from sample position 1 and drive it to waste.

Figure 13 shows an example of a timeline table summarizing the steps that can be performed in a system according to figure 2 to add reagent from channel 1 to all five samples, wait for a desired period of time for the reaction and then remove the reagent from all samples and drive it to waste.

Figure 14 shows an example of a timeline table summarizing the steps that can be performed in a system according to figure 3 to add reagent from channel 1 to sample compartment 1, wait for a desired period of time for the reaction and then remove the reagent from sample position 1 and drive it to waste.

Figure 15 shows a table with a composition of R1 (a Lipid Extraction Reagent, or LER), and R2 (a Refractive Index Reagent, or RIR) according to a standard optical tissue clearing protocol (CUBIC protocol).

Figure 16 shows the clearing efficiency of CUBIC and TDE in whole mouse organs. % of the original value for $\mu$ (Attenuation coefficient) reduced for each sample after clearing with CUBIC or TDE. Higher values mean higher transparency and more effective clearing action. N=1 for each method and organ. CUBIC: 6 days R1 + 1 day R2, 37°C, shaker. TDE 97%: 1 day, 37°C, shaker.

Figure 17 shows whole mouse organs after clearing protocol. Results of clearing with A) CUBIC and B) TDE. CUBIC: 6 days R1 + 1 day R2, 37°C, shaker. TDE 97%: 1 day, 37°C, shaker.

Figure 18 shows the clearing efficiency of CUBIC protocol and TDE in thick human infant thymus samples. A) % of the original value for $\mu$ (Attenuation coefficient) reduced for each sample after clearing with CUBIC or TDE. Higher values mean higher transparency and more effective clearing action. N=1 for each method. CUBIC: 8 days R1 + 1 day R2, 37°C, shaker. TDE 80%: 1 day, 37°C, shaker. B,C,D) Thick human infant thymus samples before and after clearing protocol. B) Original sample, C) Result of clearing with CUBIC, D) Result of clearing with TDE. CUBIC: 8 days R1 + 1 day R2, 37°C, shaker. TDE 80%: 1 day, 37°C, shaker.

Figure 19 shows the clearing efficiency of CUBIC protocol, comprising Reagent 1 (R1) + Reagent 2 (R2), and of Reagent 1 (R1) + TDE in whole mouse organs. % of the original value for $\mu$ (Attenuation coefficient) reduced for each sample after clearing with CUBIC or R1+TDE. Higher values mean higher transparency and more effective clearing action. N=3 for each method and organ. Error bars given as standard error. CUBIC: 12 days R1 + 1 day R2, 37°C, shaker. R1 + TDE: 12 days R1 + 1 day TDE 97%, 37°C, shaker.

Figure 20 shows different whole mouse organs after two (A and B) clearing protocols. Results of clearing with A) CUBIC (R1 + R2) and B) R1+TDE. CUBIC: 12 days R1 + 1 day R2, 37°C, shaker. R1 + TDE: 12 days R1 + 1 day TDE 97%, 37°C, shaker.

Figure 21 shows the clearing efficiency of CUBIC protocol and R1+TDE in thick human infant thymus samples. A) % of the original value for $\mu$ (Attenuation coefficient) reduced for each sample after clearing with CUBIC or R1+TDE. Higher values mean higher transparency and more effective clearing action. N=1 for each method. B) Original sample, C) Result of clearing with R1+TDE. R1+ TDE: 8 days R1 + 1 day TDE 80%, 37°C, shaker.

Figure 22 shows whole mouse organs after dilute $H_2O_2$ bleaching protocol. A) Original samples, B) result of bleaching protocol. Bleaching: 45min 10% H2O2 in PBS, 65°C, glass container.

Figure 23 shows the clearing efficiency of CUBIC protocol and R1+ $H_2O_2$ +TDE in whole mouse organs. % of the original value for $\mu$ (Attenuation coefficient) reduced for each sample after clearing with CUBIC or R1+ $H_2O_2$ +TDE. Higher values mean higher transparency and more effective clearing action. N=3 for each method and organ. Error bars given as standard error. CUBIC: 10 days R1 + 1 day R2, 37°C, shaker. Bleaching: 45min 10% $H_2O_2$ in PBS, 65°C, glass container. R1+ TDE: 10 days R1 + 1 day TDE 97%, 37°C, shaker.

Figure 24 shows whole mouse organs after clearing protocol. Results of clearing with A,C) CUBIC and B,D) R1+ $H_2O_2$ +TDE. CUBIC: 10 days R1 + 1 day R2, 37°C, shaker. Bleaching: 45min 10% H2O2 in PBS, 65°C, glass container. R1 + TDE: 10 days R1 + 1 day TDE 97%, 37°C, shaker.

Figure 25 shows the effect of tissue clearing protocols on organ volume. A) % of change in volume experienced by the samples after finishing the tissue clearing protocols. Higher values mean a more drastic change in volume. N=3 for each method and organ. Error bars given as standard error. B) Comparison between the visual effects of size changes in mouse brain samples between original (top), TDE-treated (center) and R1-treated (bottom), showcasing the shrinking and enlarging effects of TDE and R1, respectively. 1 day TDE 97%, 37°C, shaker. 6 days R1, 37°C, shaker.

Figure 26 shows Hematoxylin & Eosin studies of cleared brain samples. A) Control, B) R1+TDE, C) R1+$H_2O_2$+TDE, D) $H_2O_2$+R1+TDE. 20x Bright-field microscopy. Bleaching: 45min 10% $H_2O_2$ in PBS, 65°C, glass container. R1+ TDE: 10 days R1 + 1 day TDE 97%, 37°C, shaker

Figure 27 shows the effect of TDE incubation in AlexaFluor 488 fluorescence. A) Signal-to-noise ratio values over time for AlexaFluor 488 in samples incubated in PBS (control) and TDE 97%. B,C) examples of DAPI (Blue) and AlexaFluor 488 (Green) visualization in samples incubated for 1h in B) PBS (control) and C) TDE 97%. 20x Confocal Microscopy images. Scale bar = 37.2 $\mu$m.

Figure 28 shows the results of DAPI (Blue) and Sox2 (Green) IHC labelling in R1+$H_2O_2$+TDE-cleared mouse brain samples. 10x magnification confocal microscopy. A) DAPI, B) Sox2, C) channel merge. Bleaching: 45min 10% H2O2 in PBS, 65°C, glass container. R1+ TDE: 10 days R1 + 1 day TDE 97%, 37°C, shaker.

Figure 29 shows 3D SPIM imaging of R1+$H_2O_2$+TDE-cleared mouse brain vasculature. A) Maximum intensity projection of SPIM 3D stack, B,C) 3D reconstructions of the acquired stack. 5x SPIM microscopy, von Willebrand factor. Stack depth: 7.7mm. Bleaching: 45min 10% H2O2 in PBS, 65°C, glass container. R1+ TDE: 10 days R1 + 1 day TDE 97%, 37°C, shaker.

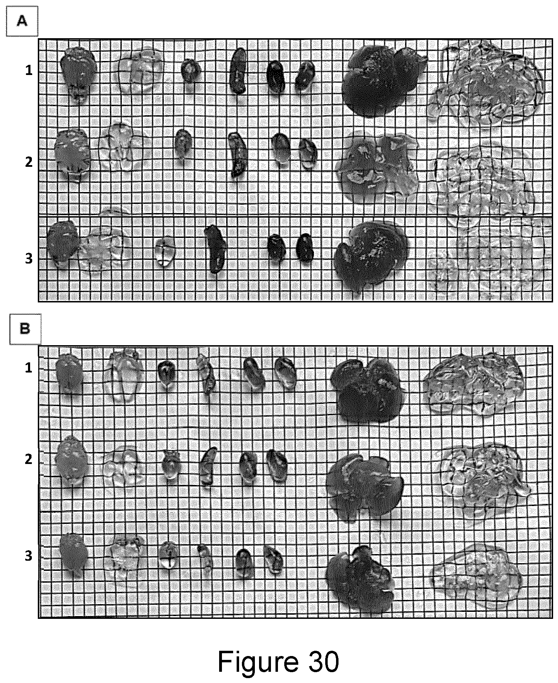

Figure 30 shows A) Whole mouse organs after 36h incubation in R1 post-perfusion using the modified perfusion protocol. 1) Control (no perfusion), 2) R1 perfusion, 3) R1 + $H_2O_2$ perfusion. B) Whole mouse organs after 36h incubation in R1 and 12h incubation in TDE 80% post-perfusion. 1) Control (no perfusion), 2) R1 perfusion, 3) R1 + $H_2O_2$ perfusion.

Figure 31 shows a comparison table between select properties of TDE and CUBIC's Refractive Index matching Reagent.

Figure 32 shows the results of IHC/IF labelling on R1+$H_2O_2$+TDE-cleared thick mouse brain samples. White staining is: CD31 (vasculature), DAPI (cell nuclei), NeuN (neurons). 10x confocal microscopy, Slice depth: 3,5mm, Stack depth: 230$\mu$m.

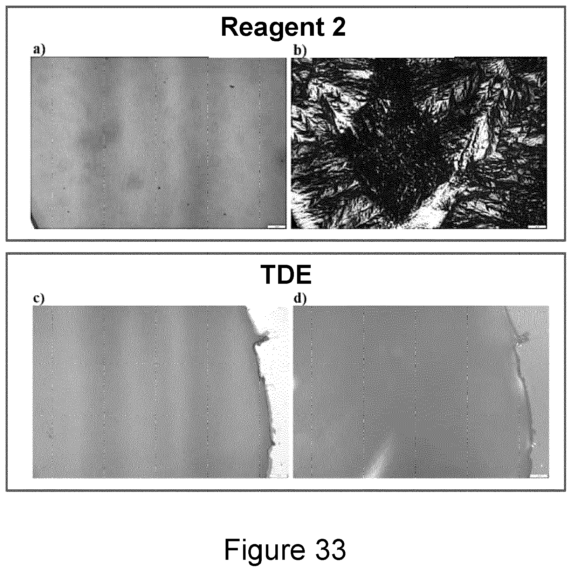

Figure 33 show reflected light microscope images of mouse brain sections. (a) and (b) show mouse brain sections cleared with Reagent 1 (R1) of the CUBIC protocol) and Reagent 2 (R2) of the CUBIC protocol, wherein (a) has been obtained without using the polarizer of the reflected light microscope and (b) has been obtained using the polarizer of the reflected light microscope. Figure 33 (c) and (d) show mouse brain sections cleared with Reagent 1 (R1) of the CUBIC protocol, and TDE, wherein (c) has been obtained without using the polarizer of the reflected light microscope and (d) has been obtained using the polarizer of the reflected light microscope.

## Description of the invention

### Definitions

It must be noted that, as used herein, the singular forms "a", "an", and "the", include plural references unless the context clearly indicates otherwise. Further, unless otherwise indicated, the term "at least" preceding a series of elements is to be understood to refer to every element in the series. Those skilled in the art will recognize or be able to ascertain using no more than routine experimentation, many equivalents to the specific embodiments of the invention described herein. Such equivalents are intended to be encompassed by the present invention.

It is noted that the term "about", if used herein, refers to +/- 30%, preferably +/- 20%, preferably +/- 15%, more preferably +/- 10%, of the indicated referred value. It may also refer to the exact value, that is, +/- 0% or the standard measurement error. Also, any quantity, composition percentages and/or dimension mentioned herein is understood to present an error of +/- 30%, preferably +/- 20%, preferably +/- 15%, more preferably +/- 10%, more preferably +/- 5% of the indicated value. It may also refer to the exact value, that is, +/- 0% or the standard measurement error. For example, a 50% w/v may correspond to an interval of 50% +/- 30%, that is, to the interval 35% to 65% w/v, preferably corresponds to an interval of 50% +/- 20%, that is, to the interval 40% to 60%, more preferably corresponds to an interval of 50 % +/- 15%, that is, to the interval 42.5% to 57.5% w/v, even more preferably corresponds to an interval of 50% +/- 10%, that is, to the interval 45% to 55% w/v, even more preferably corresponds to an interval of 50% +/- 5%, that is, to the interval 47.5% to 52.5% w/v.

As used herein, the conjunctive term "and/or" between multiple recited elements is understood as encompassing both individual and combined options. For instance, where two elements are conjoined by "and/or", a first option refers to the applicability of the first element without the second. A second option refers to the applicability of the second element without the first. A third option refers to the applicability of the first and second elements together. Any one of these options is understood to fall within the meaning, and therefore satisfy the requirement of the term "and/or" as used herein. Concurrent applicability of more than one of the options is also understood to fall within the meaning, and therefore satisfy the requirement of the term "and/or."

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. When used herein the term "comprising" can be substituted with the term "containing" or "including" or sometimes when used herein with the term "having". Any of the aforementioned terms (comprising, containing, including, having), whenever used herein in the context of an aspect or embodiment of the present invention may be substituted with the term "consisting of", though less preferred.

When used herein "consisting of' excludes any element, step, or ingredient not specified in the claim element. When used herein, "consisting essentially of" does not exclude materials or steps that do not materially affect the basic and novel characteristics of the claim.

The term "Refractive Index Reagent (RIR)", in the context of the invention, refers to a chemical solution or compound used to adjust the refractive index of a sample to closely match that of the surrounding medium, thereby minimizing light scattering and improving the optical clarity of the sample for microscopic examination. The RIR may comprise compounds such as, but not limited to, 2,2'-thiodiethanol (TDE), glycerol, n-butyl alcohol, benzyl alcohol, benzyl benzoate, and methyl salicylate, wherein the RIR preferably comprises or consists of TDE. It is noted that in well-known clearing protocols the RIR is Reagent 2 (R2) of the CUBIC protocol, however using TDE as RIR instead offers several advantages as a refractive index matching clearing reagent, such as its low viscosity, which enhances reagent penetration speed and eases its use in automated systems by preventing clogs. Furthermore, TDE's refractive index can be adjusted by changing its concentration, allowing customization for different tissues and imaging systems, and, additionally, TDE is easy to prepare and store, with a long shelf life and stability at low temperatures without requiring special handling. It is understood that TDE or any of the RIR above-mentioned may be in aqueous solution, and it may be diluted to various concentrations depending on the specific needs of the application, such as for instance from about 30% to 99% in water, preferably from 50% to 97% in water, more preferably from 75% to 95% in water.

The term "Lipid Extraction Reagent (LER)", in the context of the invention, refers to a chemical or mixture of chemicals specifically formulated to dissolve, extract, and/or isolate lipids from various biological samples, such as tissues, cells, or fluids, preferably large tissue samples and/or whole organs. The LER may comprise compounds such as, but not limited to, N,N,N,N-tetrakis(2-hydroxypropyl)ehylenediamine, Urea, Triton X-100, Methanol, Chloroform, Ethanol, Isopropanol, Hexane, Diethyl Ether, Acetone, Dichloromethane, Ethyl Acetate, Petroleum Ether, Toluene, Pyridine, Dioxane, Naphta, Xylene, Cyclohexane, Benzene, Dimethyl Sulfoxide (DMSO), Dimethyl Formamide (DMF), Methyl Ethyl Ketone (MEK), Tetrahydrofuran (THF) and Methyl tert-butyl ether (MTBE). Wherein the LER preferably comprises or consists of N,N,N,N-tetrakis(2-hydroxypropyl) ehylenediamine, Urea and/or Triton X-100. More preferably, the LER is Reagent 1 (R1) of the CUBIC protocol. It is understood that any of the above-mentioned LER may be in aqueous solution, and it may be diluted to various concentrations depending on the specific needs of the application.

The term "Bleaching Reagent (BR)", in the context of the invention, refers to a chemical solution or compound designed to reduce or eliminate the natural pigmentation or fluorescent background of a sample, thereby enhancing the clarity and contrast for microscopic analysis or imaging. The BR may comprise compounds such as, but not limited to, Hydrogen Peroxide ($H_2O_2$), Sodium Hypochlorite (NaClO), Potassium Permanganate (KMnO4), Sodium Borohydride, Oxalic Acid, Formic Acid, Chloral Hydrate, Ethanol, Acetic Acid, Calcium Hypochlorite, Phenol, and Hydroquinone. Wherein the BR preferably comprises or consists of Hydrogen Peroxide ($H_2O_2$). It is understood that any of the above-mentioned BR may be in aqueous solution, and it may be diluted to various concentrations depending on the specific needs of the application.

The term "Labelling Reagent (LR)", in the context of the invention, refers to a chemical compound or a mixture of compounds used to mark or tag specific molecules, structures, or entities within a sample for the purpose of detection, identification, or quantification during microscopic examination or analysis. The LR may be specifically designed to bind to or interact with target molecules, such as proteins, nucleic acids, lipids, or carbohydrates, thereby making them distinguishable under imaging techniques. It is noted that labelling reagent may refer to compounds known to be used in haematoxylin and eosin staining and/or immunostaining, wherein immunostaining may comprise immunohistochemistry and/or immunofluorescence techniques. It is further noted that the LR may comprise compounds such as, but not limited to, fluorescein isothiocyanate (FITC), rhodamine, Alexa Fluor dyes, phycoerythrin (PE), allophycocyanin (APC), peridinin chlorophyll protein (PerCP), Cy dyes (e.g., Cy3, Cy5), green fluorescent protein (GFP), biotin, digoxigenin and horseradish peroxidase (HRP). It is understood that any of the above-mentioned LR may be in aqueous solution, and it may be diluted to various concentrations depending on the specific needs of the application.

The term "Calcium Removal Reagent (CRR)", in the context of the invention, refers to a chemical solution or compound specifically formulated to remove or sequester calcium ions (Ca2+) from biological samples, such as tissues, cells, or biofluids, preferably large tissue samples and/or whole organs. The CRR may comprise compounds such as, but not limited to, ethylenediaminetetraacetic acid (EDTA), ethylene glycol tetraacetic acid (EGTA), citric acid, and ammonium oxalate. Wherein the CRR preferably comprises or consists of EDTA and EGTA. It is understood that any of the above-mentioned CRR may be in aqueous solution, and it may be diluted to various concentrations depending on the specific needs of the application.

The term "Fixative Reagent (FR)", in the context of the invention, refers to a chemical solution or compound that stabilizes and preserves the morphology and structure of biological samples, such as tissues, cells, or specific biomolecules, preferably large tissue samples and/or whole organs, for instance by cross-linking or precipitating biomolecules to prevent degradation and to maintain the sample's structural integrity during storage, handling, and analysis. The FR may comprise compounds such as, but not limited to, formaldehyde (formalin), glutaraldehyde, ethanol, methanol, acetic acid, osmium tetroxide, paraformaldehyde, and picric acid. Wherein the FR preferably comprises or consists of formaldehyde, glutaraldehyde, and/or ethanol. It is understood that any of the above-mentioned FR may be in aqueous solution, and it may be diluted to various concentrations depending on the specific needs of the application.

The term "multi-channel subsystem", in the context of the invention, refers to a channel assembly designed to facilitate selective fluid communication between various components of the system, such as, but not limited to, reagent containers, sample containers, waste disposal units and/or analytical or processing units. This subsystem is preferably adapted to or configured to enable the simultaneous or sequential selection and routing of multiple fluids from different sources to designated destinations. The multi-channel subsystem may incorporate features such as, but not limited to, multiple valves (e.g., solenoid valves, pinch valves), microfluidic channels, rotary valves, or peristaltic pumps, each capable of opening or closing fluid paths to enable or restrict flow based on the operational requirements. Examples of multichannel subsystems that may be used comprise, but are not limited to, microfluidic chips with integrated channels and valves, designed for precise control over fluid movement at the microscale; rotary selection valves, which connect different input channels to a common output channel based on their rotational position, thus allowing for the selection of different reagents or samples with minimal cross-contamination; and/or automated valve arrays, capable of programmatically controlling the flow between numerous inputs and outputs, facilitating complex fluidic operations such as sample mixing, dilution, or sequential reagent addition. Technologies employed in these subsystems may span from pneumatic or electrically actuated valves for rapid and precise flow control, to software-controlled syringe pumps for accurate volume dispensing. Additionally, configurations might include the use of disposable cartridges or chips to minimize contamination and maintenance requirements, or modular designs that allow for easy expansion or customization of the system to accommodate a wide range of assays and protocols.

The term "solvent reservoir", in the context of the invention, refers to a container or receptacle within the system, preferably in fluid communication with the reagent subsystem, which allows the controlled storage and handling of solvents or reagents. This reservoir is preferably at room temperature or above, allowing the reagents to be brought to temperatures closer to the sample temperatures before their introduction to the sample containers, allowing them to gradually transition from storage conditions, such as, for instance, around 4°C, to a preferred temperature for sample interaction, such as, for instance, around 37°C. Additionally, the solvent reservoir may act as a protective barrier to prevent direct entry of reagents into the fluid pump, such as for instance a syringe pump, protecting the pump mechanism from potential contamination and wear.

The term "fluid pump", in the context of the invention, refers to a device or component designed to facilitate the controlled movement of fluids within the system, such as, for instance, the transport of reagents towards sample containers and the disposal of fluids from sample containers to the waste disposal unit. This term encompasses a variety of mechanisms capable of generating fluid flow such as, but not limited to, syringe pumps, peristaltic pumps, diaphragm pumps, and centrifugal pumps. Syringe pumps, for example, allow for precise volumetric dispensing and withdrawal of fluids by mechanically driving a syringe plunger, making them suitable for applications requiring accurate volume control. Peristaltic pumps generate flow by compressing and releasing a length of flexible tubing, thus offering a contamination-free method to move liquids without direct contact with the pump mechanism. Diaphragm pumps use a reciprocating diaphragm to create a variable volume chamber for fluid transport, combining robustness with the capability for handling a wide range of fluid viscosities. Centrifugal pumps, on the other hand, induce flow by the transfer of rotational energy from a rotor to the fluid, suited for situations where a high flow rate is desired.

The term "substance mixer", in the context of the invention, refers to a device or mechanism designed to homogenize, mix, or blend substances to achieve a substantially uniform distribution of components within a mixture. This term may encompass the thorough mixing of liquid reagents, the suspension of solid particles in a liquid medium, and/or the emulsification of immiscible liquids. The substance mixer may utilize various operational principles and designs to achieve effective mixing, such as mechanical agitation, magnetic stirring, vortexing, ultrasonic mixing, overhead stirrers, rotary mixers, shakers (including orbital and reciprocating shakers), vortex mixers, magnetic stirrers, homogenizers, and centrifugal mixers. Preferably, the substance mixer comprises or consists of agitators, orbital agitators, magnetic stirrers, and vortex mixers.

The term "sample clearing", in the context of the invention, refers to any series of techniques and procedures aimed at rendering biological samples, such as tissues or organs, optically transparent or translucent. This process facilitates the deep penetration of light and enables the detailed visualization of internal structures without the need for sectioning, thereby preserving the three-dimensional integrity of the sample. Sample clearing may involve any combination or sequence of steps designed to prepare the sample for microscopic examination or imaging, such as, but not limited to, fixation to preserve molecular content and structure, lipid removal or delipidation to enhance transparency and allow for efficient antibody diffusion, decalcification to remove calcium deposits, bleaching or depigmentation to reduce natural pigmentation and improve background clarity, labelling with fluorescent probes or antibodies to highlight structures of interest, and/or optical clearing to homogenize the refractive index across the sample. The choice of specific reagents and protocols for each step, such as the use of solvent-based or aqueous-based methods for optical clearing, may depend on consideration such as target transparency, preservation of sample integrity, time required, associated cost, and compatibility with subsequent imaging or analytical techniques.

The term "bleaching step", in the context of the invention, refers to a process that may be comprised within a broader methodology of preparing biological samples for detailed observation and analysis, preferably as part of tissue clearing and preparation protocols. This step comprises reducing or completely removing the natural pigmentation and autofluorescence from biological tissues or samples, thereby improving the transparency and optical clarity of the sample for microscopy. The bleaching step may comprise the application of chemical agents, such as Hydrogen Peroxide ($H_2O_2$), Sodium Hypochlorite (NaClO), or other oxidative compounds, preferably $HH_2O_2$, which effectively diminish pigments and fluorescent noise without significantly affecting the sample's structural integrity.

The term "clearing step", in the context of the invention, refers to a process that may be comprised within a broader methodology of preparing biological samples for detailed observation and analysis, preferably as part of tissue clearing and preparation protocols, specifically aimed at achieving optical transparency in biological samples such as tissues and organs. This step aims to facilitate deep light penetration and detailed imaging of internal structures without the distortion or loss of three-dimensional integrity that occurs with traditional sectioning methods. The clearing step may comprise employing a variety of techniques and refractive index reagents to homogenize the refractive index throughout the sample, effectively minimizing light scattering and absorption, such as, for instance, incubating in 2,2'-thiodiethanol (TDE).

The term "labelling step", in the context of the invention, refers to a process that may be comprised within a broader methodology of preparing biological samples for detailed observation and analysis, preferably as part of tissue clearing and preparation protocols, where specific molecules, structures, or entities within a biological sample are tagged or marked with labelling reagents for the purpose of identification, visualization, or quantification. This step allows highlighting particular components of interest within the sample, such as proteins, nucleic acids, lipids, or carbohydrates, enabling their detection and analysis through various microscopy or analytical techniques. Labelling reagents used in this step may comprise fluorescent dyes, enzymes, antibodies, and/or probes that specifically bind to target molecules, thereby rendering them distinguishable from the surrounding biological matrix.

The term "lipid extraction step", in the context of the invention, refers to a process that may be comprised within a broader methodology of preparing biological samples for detailed observation and analysis, preferably as part of tissue clearing and preparation protocols, where lipids are selectively dissolved and removed from biological samples, such as tissues, cells, or fluids, preferably large biological tissues and/or organs. This step allows enhancing the transparency and penetrability of the sample for microscopic examination by reducing light scattering and absorption caused by lipids. The lipid extraction step may employ a variety of reagents and solvents, such as detergents, alcohols, and organic solvents, capable of effectively solubilizing and removing lipids from the sample while minimizing damage to other cellular components. Examples of such reagents may include, but are not limited to, N,N,N,N-tetrakis(2-hydroxypropyl)ehylenediamine, Urea, Triton X-100, Methanol, Chloroform, Ethanol, Isopropanol, Hexane, Diethyl Ether, Acetone, Dichloromethane, Ethyl Acetate, Petroleum Ether, Toluene, Pyridine, Dioxane, Naphta, Xylene, Cyclohexane, Benzene, Dimethyl Sulfoxide (DMSO), Dimethyl Formamide (DMF), Methyl Ethyl Ketone (MEK), Tetrahydrofuran (THF) and Methyl tert-butyl ether (MTBE).

The term "decalcification step", in the context of the invention, refers to a process that may be comprised within a broader methodology of preparing biological samples for detailed observation and analysis, preferably as part of tissue clearing and preparation protocols, where calcium ions are removed from hard tissue samples, such as bone or teeth, to render them more amenable to cutting, imaging, and analysis. This step may allow preventing the distortion or damage to tissues during the sectioning process and for enhancing the penetration of stains, reagents, and probes in subsequent steps. The decalcification step employs a variety of chelating agents and acids that effectively bind to and remove calcium ions from the tissue matrix. Examples of decalcification reagents may comprise, but are not limited to, Ethylenediaminetetraacetic acid (EDTA), formic acid, nitric acid, hydrochloric acid, citric acid, acetic acid, ammonium oxalate, trisodium citrate dihydrate, ethylene glycol-bis(β-aminoethyl ether)-N,N,N',N'-tetraacetic acid (EGTA), and phosphoric acid.

The term "fixation step", in the context of the invention, refers to a process that may be comprised within a broader methodology of preparing biological samples for detailed observation and analysis, preferably as part of tissue clearing and preparation protocols, where biological samples are preserved by stabilizing their cellular and sub-cellular structures. This step allows for maintaining the morphological and molecular integrity of tissues and cells, preventing enzymatic degradation and autolysis that could otherwise alter their composition and appearance. The fixation step may comprise using a variety of chemical agents that crosslink proteins and nucleic acids, thus preserving the structural and biochemical features of the sample for subsequent examination. Examples of fixative reagents used in this step may include, but are not limited to, formaldehyde (formalin), glutaraldehyde, paraformaldehyde, ethanol, methanol, acetic acid, and osmium tetroxide, preferably formaldehyde and glutaraldehyde.

The term "saline buffer solution", in the context of the invention, refers to an aqueous solution designed to maintain the pH and osmotic balance of a biological sample during processing, for example during steps from a methodology of preparing biological samples for detailed observation and analysis, such as bleaching and refractive index matching. This solution allows the preservation of cellular integrity and biochemical stability, preventing degradation or alteration of the sample's molecular structure. The saline buffer solution may comprise different formulations, including, but not limited to, phosphate-buffered saline (PBS), Tris-buffered saline (TBS), HEPES-buffered saline, EBSS (Earle's Balanced Salt Solution), HBSS (Hank's Balanced Salt Solution), PBS with EDTA, Tris-HCl buffer, MES buffer (2-(N-morpholino)ethanesulfonic acid), MOPS buffer (3-(N-morpholino) propanesulfonic acid), and bicarbonate-buffered saline, preferably PBS.

The term "biological sample", in the context of the invention, refers to an organ, tissue or cell from a multicellular eukaryote, such as from a human, an animal or a plant, preferably from a tissue or whole organ from a laboratory testing animal, or tissue from a whole, or a part of, a human organ such as the heart, blood vessels, salivary gland, oesophagus, stomach, liver, gallbladder, pancreas, intestine, colon, rectum, anus, endocrine gland, adrenal gland, kidney, ureter, bladder, lymph node, tonsils, adenoid, thymus, spleen, skin, muscle, brain, spinal cord, nerve, ovary, fallopian tube, uterus, vagina, mammary gland, testes, prostate, penis, pharynx, larynx, trachea, bronchi, lung, diaphragm, cartilage, ligaments, and tendon.

## Description

Each embodiment disclosed herein is contemplated as being applicable to each of the other disclosed embodiments. Thus, all combinations of the various elements described herein are within the scope of the invention. It should also be understood that, unless clearly indicated to the contrary, in any methods claimed herein that include more than one step or act, the order of the steps or acts of the method is not necessarily limited to the order in which the steps or acts of the method are recited.

In a first aspect of the invention a system (100) for treating samples (12) is disclosed, preferably for clearing biological tissue (12), such as, but not limited to, human tissue, animal tissue, experimentation animal's tissue or organs, and/or plant tissue. More preferably the system (100) is configured for clearing large tissue samples (12) or whole organs, preferably between 0.1 and 100 mm in diameter, more preferably between 0.5 and 75 mm, even more preferably between 1 and 40 mm. The system (100) is an automated system with access to electrical power and electronic means to control the system (100), allowing it to operate in an automated way.

The system comprises a sample subsystem (1) comprising one or more sample containers (10). It is noted that the sample containers (10) are adapted to or configured to adequately keep the samples (12) during the processing steps. In some embodiments, the sample containers (10) may be fabricated from materials such as, but not limited to, glass, plastics, polymers, ceramics, or a combination thereof, depending on the chemical compatibility and optical properties required. The design of the sample containers (10) may vary, including features such as variable volumes, shapes (e.g., cylindrical, rectangular, custom shapes), and adaptability to different sample types (solid, liquid, gel, etc.). In some embodiments the sample subsystem (1) may define an independent space inside the system (100), such as by being enclosed by walls, wherein said space is preferably thermally isolated, atmospherically isolated to control variables such as pressure and/or gas composition, and/or isolated from the exterior light, particularly from sunlight or high energy light such as UV light. Furthermore, in some embodiments the sample subsystem (1) may be configured to control a range of environmental conditions, such as, but not limited to, pressure, temperature, humidity, and atmospheric composition such as creating an atmosphere of an inert gas like nitrogen, to safely keep, maintain, or alter the state of the samples as needed. It is also noted that preferably the sample subsystem (1) is dimly illuminated to better conserve the samples, more preferably with low energy light, such as red light.

The system also comprises a reagent subsystem (3) comprising one or more reagent containers (30). The reagent subsystem (3) is adapted to or configured to store and preferably dispense various reagents (30) employed in the sample preparation process. In some embodiments, at least one or more reagent containers (30) of the reagent subsystem (3) comprise a reagent, preferably a Lipid Extraction Reagent (LER) and/or a Refractive Index Reagent (RIR), more preferably a LER. In some embodiments, the reagent subsystem (3) comprises additional, preferably more than one, reagent containers (30), wherein at least one of these additional reagent containers (30) preferably comprise one of the reagents from the list consisting of: : a LER, Fixative Reagents (FR), Calcium Removal Reagents (CRR), Bleaching Reagents (BR), Labelling Reagents (LR) and a RIR. Preferably, the reagent subsystem (3) comprises at least three reagent containers (30), each of them comprising one of a LER, a RIR or a LR, more preferably wherein the reagent subsystem (3) comprises a LER, a RIR and a LR in three or more reagent containers (30). In some embodiments, the reagent subsystem (3) comprises at least four reagent containers (30), each of them comprising one of a LER, a RIR, a BR or a LR, preferably wherein the reagent subsystem (3) comprises a LER, a RIR, a BR and a LR in four or more reagent containers (30). Wherein each type of reagent may comprise or refer to one or more reagents. Each type of reagent, or each reagent of each type of reagents, may be utilized in different steps of the sample preparation process, such as, but not limited to, fixation for preservation, calcium removal for softening, bleaching for pigment removal, lipid extraction for optical clarity, labeling for microscopy, and refractive index adjustment to avoid the light to be distorted upon transmission through the sample. The containers within this subsystem may be made from materials that offer chemical resistance and are compatible with the stored reagents, such as, but not limited to, glass, various plastics, or coated metals. This subsystem allows for precise control and dispensation of reagents, preferably comprising automated dispensing mechanisms, volume control, and integration with multi-channel subsystems (20) for efficient processing. In some embodiments the reagent subsystem (3) may define an independent space inside the system (100), such as by being enclosed by walls, wherein said space is preferably thermally isolated, atmospherically isolated to control variables such as pressure and/or gas composition, and/or isolated from the exterior light, particularly from sunlight or high energy light such as UV light. Furthermore, in some embodiments the reagent subsystem (3) may be configured to control a range of environmental conditions, such as, but not limited to, pressure, temperature, humidity, and atmospheric composition such as by creating an atmosphere of an inert gas like nitrogen, to safely keep, maintain, or alter the state of the samples as needed. It is also noted that preferably the sample subsystem (1) is dimly illuminated to better conserve the samples, more preferably with low energy light, such as red light.

It is noted that in some embodiments the reagent containers (30) may be refillable, or they can be substituted. Additionally, the reagent containers (30) may be empty, at least initially, as for example when commercially acquiring the system (100), but they may be configured to comprise any of the reagents above mentioned. For instance, at least one of the one or more reagent containers (30) may be configured to comprise a LER. Other containers (30) may be comprised in the system (100) wherein said containers may be initially or at some point empty, but they may be configured to comprise a FR, CRR, BR, LR and/or a RIR. In some embodiments the system (100) is configured to displace one of the reagents from the list consisting of: a LER, FR, a CRR, a BR, a LR and a RIR from the reagent subsystem (3) to the sample subsystem (1), preferably is configured to displace at least a LER, from the reagent subsystem (3) to the sample subsystem (1), more preferably is configured to displace at least a RIR from the reagent subsystem (3) to the sample subsystem (1). The system (100) may also be configured to keep the samples (12) in contact with a reagent from the list mentioned above accordingly to the required contacting time for a given step of a clearing protocol.

The system (100) also comprises one or more multi-channel subsystems (20) in fluid communication with the sample subsystem (1) and the reagent subsystem (3). Said multichannel subsystems (20) may thus comprise fluid communication means such as tubes, pipes or channels, among others, to establish a fluid connection at least between the sample subsystem (1) and the reagent subsystem (3), wherein the system (100), the multi-channel subsystems (20) or any other subsystem may comprise controllable opening and closing mechanisms to open or close a fluid connection, and may comprise as well fluid pumps or fluid movement inducing mechanisms to displace fluid among different subsystems, preferably to displace selected fluid at least from the reagent subsystem (3) to the sample subsystem (1). In some embodiments the system (100) and/or the multi-channel subsystems (20) may further comprise fluid pumps or fluid movement inducing mechanisms to displace fluid from the sample subsystem (1) to the waste disposal unit (14), to the reagent subsystem (1), to the multichannel subsystem (20), or from and to any combination of subsystems or units. The one or more multi-channel subsystems (20) may thus enable the transfer of reagents to the samples (12), to a waste disposal unit (14), or to any other subsystem, reservoir or container, including the possibility of transporting the reagents back and forth depending on the operating mode and the needs of the sample to be contacted or no by the reagents. The one or more multi-channel subsystems (20) may comprise any number of channels, pumps, valves, and/or connectors, constructed from materials compatible with the reagents and the samples being handled. The design allows for simultaneous and/or sequential processing of multiple samples, efficient reagent use, and the automation of sample preparation processes. The configuration can be customized to support a range of flow rates, pressures, and volumes, accommodating diverse experimental setups and requirements, such as more or less samples with bigger or smaller sizes.

Optionally but preferably, the system (100) further comprises a waste disposal unit (14), preferably comprised in the sample subsystem (1). The waste disposal unit (14) may comprise one or more recipients or containers for one or more waste reagents and/or samples (12), or it may comprise just channels that transport the waste to an external container, not necessarily comprised in the system (100), or to an external sewage system. The waste disposal unit (14) is preferably configured for the safe and efficient disposal of waste generated during the sample (12) preparation process. This unit (14) may comprise containers for liquid and solid waste, as well as mechanisms for their containment, treatment, and disposal. Materials used in this unit may be selected for chemical resistance and durability, ensuring safe operation and compliance with environmental regulations, such as, but not limited to, Polyethilene (PE), Polypropylene (PP), Acrylonitrile Butadiene Styrene (ABS), Polyvinyl Chloride (PVC), and other types of plastics safe for use with chemical agents, glass and or amber glass.

Preferably, the one or more reagent containers (30) of the reagent subsystem (3) comprise at least a Lipid Extraction Reagent (LER) and, optionally, at least one of the reagents from the list consisting of: a Fixative Reagent (FR), a Calcium Removal Reagent (CRR), a Bleaching Reagent (BR), a Labelling Reagent (LR) and a Refractive Index Reagent (RIR), wherein said list of reagents denotes types of reagents, therefore there may be several reagents included in the category of LER, several in the category of RIR, etc. wherein said reagents may be applied alone or in combination with other reagents from the same category or different one, in order to carry on clearing steps such as fixation, decalcification, bleaching, lipid removal, labelling, and/or refractive index homogenization.

It is noted that the system (100) may comprise one or more exhaust openings, ventilators and filters such as, for instance, to get rid of fumes and/or maintain ambient pressure. Said features may be comprised in the system (100) and in any of the subsystems (1, 2, 3).

It is noted that the use of a LER is very convenient and generally employed in clearing protocols to dissolve and extract lipids and clear the sample, however, as is shown in Example 1, it may be possible to have a clearing protocol without LER, in particular if using TDE as a standalone protocol.

Advantageously, the system (100) of the invention presents an automated approach to sample preparation and analysis, addressing and overcoming previous limitations in the field. As an automated system, it offers unparalleled versatility in handling various sample sizes and types, capable of processing these samples either sequentially or simultaneously, individually or in bulk. This flexibility is pivotal for labs dealing with diverse research requirements, enabling efficient workflow management and optimization of time and reagent use. The ability of the system to operate unattended is a significant advancement, liberating researchers and users from time-consuming manual processes and thus fostering a more efficient allocation of resources. Furthermore, in some embodiments of the invention the system (100) is capable of performing different preparatory steps, such as, but not limited to, fixation, decalcification, bleaching, lipid removal, labelling, and refractive index homogenization, either independently or in combination, introducing a level of customization and adaptability previously unseen. This versatility allows the system (100) to be employed in a big number of diverse sample (12) preparation methods, broadening its applicability across various scientific disciplines. Additionally, the subsystems (1, 3) may be modular, therefore they may be independent and encased, allowing for the precise regulation of environmental variables such as temperature, moisture, humidity, and the atmosphere pressure and nature within the subsystems, potentially including inert gases like nitrogen. This level of control not only enhances the quality and reliability of the sample preparation process but also contributes to the preservation of sensitive samples by minimizing degradation and promoting the stability of chemical compounds during processing. Additionally, the system allows for the first time to standardize processes among different laboratories, offering reproducible results that do not depend on the operator's skill level. This standardization significantly reduces the potential for human error, ensuring consistent and reliable outcomes.

In a preferred embodiment of the first aspect of the invention, the reagent subsystem (3) further comprises one or more reagent containers (30) comprising a refractive index reagent (RIR). The inclusion of a RIR, preferably in combination with a Lipid Extraction Reagent (LER), significantly enhances the clearing process, providing a synergistic effect that improves sample transparency and/or translucency. This dual-reagent approach allows for a comprehensive clearing method that not only removes lipids effectively with the LER but also adjusts the sample's refractive index with the RIR to match that of the surrounding medium. Such adjustment is critical for reducing light scattering, thereby improving the optical clarity of the sample for subsequent imaging or analysis. The RIR may be formulated from a variety of chemical compounds, including, but not limited to, aqueous solutions of urea, glycerol, or sucrose, which are known to modify the refractive index of biological samples without compromising their structural integrity.

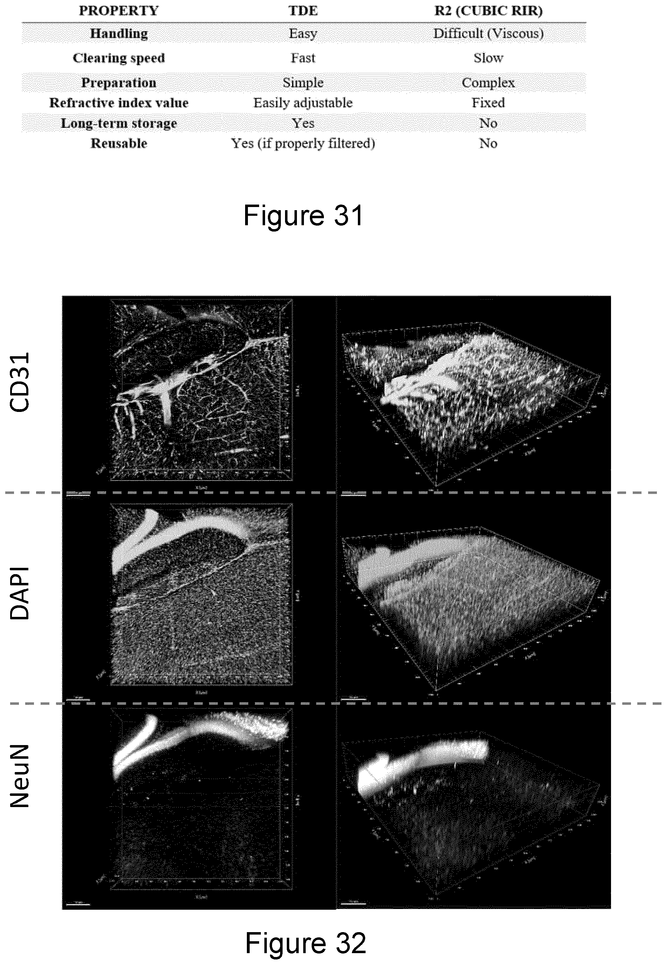

Preferably, the RIR comprised in the one or more reagent containers (30) of the reagent subsystem (3) comprises or consists of 2,2'-thiodiethanol (TDE), which presents several advantages over other RIRs generally employed, such as its low viscosity, which both increases the speed of reagent penetration into the samples (and thus the clearing speed) and makes it significantly easier and convenient to implement injection and removal of TDE through automated or mechanical systems, which would otherwise be prone to clogging or low flow speeds. Another advantage of TDE over similar reagents is the possibility to adjust its refractive index (RI) value by changing the concentration, allowing to tailor the specific RI values to different tissues and samples while maximizing the resulting transparency and/or fine-tuning the value for each imaging system's own optimal RI requirements. Furthermore, preparation and storage of TDE is a very easy process, as it is a single commercially available reagent with a long shelf life which only needs to be diluted to the target concentration and does not precipitate when kept at low temperatures and does not require any complex preparation steps nor any special conservation procedures. The advantages of TDE over a general refractive index reagent employed in clearing methods, such as the RIR of the CUBIC protocol, is shown in figure 32, which qualitatively showcases that TDE is easy to handle, clears fast, is simple to prepare, the refractive index value is easily adjustable, can be stored in the long term and may be reusable, whereas the RIR employed in clearing protocols such as CUBIC is difficult to handle due to it being viscous (difficult to extract from the bottle in a clean way, etc.), clears slowly compared to TDE, needs a complex preparation process, presents a fixed RI value, cannot be stored in the long term and cannot be reusable. It is noted that, as can be observed in figure 33, using Reagent 2 of the CUBIC protocol as RIR caused crystallization in the samples (Figure 33 (b)), whereas using TDE as RIR (Figure 33 (d)) did not cause crystallization. Said crystalline structures may compromise the structural integrity of the sample, therefore avoiding such crystallization is of great importance to avoid artifacts and deviations from the original tissue in the measurements. The crystalline structures are only observed using the polarizer of the reflected light microscope. Otherwise, both samples look very similar, as visible in Fig. 33 (a) and (c). Furthermore, using TDE shortens the total duration of the clearing protocol in 6 - 18 hours with respect to common clearing protocols that employ R2 (see the "Standard protocols" subsection in the "Materials and Methods" section of the "Examples" for the composition of R2, the RIR of the CUBIC protocol). For instance, for RI homogenization, incubation with R2 is between 12-24 h and with TDE is about 6 hours. Additional advantages is that TDE does not solidify at 4 degrees and does not crystallize, whereas R2 solidifies at 4 degrees. Besides, R2 crystallizes and even at ambient temperatures the crystals are kept incrusted in the cleared tissue, whereas TDE does not generate microcrystals, thus avoiding damage to the tissue sample or altering it.

Alternatively, silicone-based compounds, with their high refractive indices, may be used for samples requiring more significant adjustments. The specific formulation of the RIR can be tailored to the nature of the sample and the requirements of the clearing process, offering flexibility to adapt to a wide range of sample types and clearing objectives. In some embodiments, the Reagent Subsystem (3) may also be designed to accommodate the simultaneous or sequential application of the LER and RIR, further optimizing the clearing process. This could involve multi-chambered reagent containers (30) that allow for the separate storage and controlled delivery of each reagent, or integrated mixing and delivery systems that enable precise reagent blending prior to application. Additionally, the system (100) may comprise monitoring and control mechanisms to regulate the application of the RIR, providing optimal conditions for refractive index matching. In some embodiments, thus, the system (100) may comprise sensors and feedback systems to monitor the sample's optical properties in real-time, adjusting reagent delivery accordingly to achieve the desired level of translucency or transparency.

Advantageously, the incorporation of a Refractive Index Reagent (RIR) into the system (100) not only complements the lipid removal achieved by the Lipid Extraction Reagent (LER) but also fine-tunes the optical properties of the sample, enabling superior visualization and analysis. This combination approach provides a more thorough and effective clearing process, resulting in samples that are better prepared for high-resolution optical imaging techniques. Also, 2,2'-thiodiethanol (TDE) is advantageous as RIR due to its low viscosity, which speeds up sample penetration and simplifies use in automated systems. Its adjustable refractive index allows customization for various tissues and imaging needs, and, additionally, TDE is easy to prepare, store, and has a long shelf life. Not only that, but TDE does not solidify at 4° and also prevents the sample from crystalizing, thus better preserve its structural integrity.

In a preferred embodiment of the first aspect of the invention, the reagent subsystem (3) further comprises one or more reagent containers (30) comprising a bleaching reagent (BR). It is noted that a bleaching reagent may be useful for reducing or eliminating the autofluorescence and pigmentation that can obscure sample details, thereby enhancing the clarity and contrast necessary for detailed optical analysis. The Bleaching Reagent (BR) may consist of compounds such as hydrogen peroxide, sodium hypochlorite, or more specialized chemical formulations designed to selectively reduce pigmentation without damaging the sample's structural integrity. In some embodiments, the BR formulation can be optimized based on the sample type and the specific pigments or autofluorescence characteristics it presents. Furthermore, the reagent subsystem (3) may be configured to allow for the controlled application of the BR, either as a standalone treatment or in combination with other reagents such as a LER and/or a RIR. This reagent subsystem (3) may thus comprise features such as adjustable delivery rates, temperature control, and timing mechanisms to ensure that the bleaching process is tailored to the specific needs of each sample, maximizing effectiveness while minimizing potential damage.

Additionally, the system (100) may incorporate feedback mechanisms to monitor the progress of the bleaching process, adjusting reagent exposure based on real-time assessments of sample coloration and fluorescence.

Advantageously, the integration of a Bleaching Reagent (BR) within the Reagent Subsystem (3) significantly enhances the system's ability to prepare samples for high-resolution optical imaging, for instance in cases where autofluorescence or pigmentation has been a barrier to clear visualization. By effectively reducing or eliminating these optical impediments, the system (100) enables a broader range of samples to be analysed with greater accuracy and detail.

In a preferred embodiment of the first aspect of the invention, the reagent subsystem (3) further comprises one or more reagent containers (30) comprising a labelling reagent (LR). It is noted that comprising a labelling reagent may allow for an enhancement of the visibility of specific structures, molecules, or cells within a sample, enabling precise and detailed analysis. Labelling reagents may be relevant for the identification and study of particular components of interest within complex biological matrices or material samples. The labelling reagent may encompass a broad range of molecular probes, such as, but not limited to, fluorescent dyes, antibodies tagged with fluorescent or chromogenic markers, and/or nucleic acid probes for in situ hybridization techniques. These probes may be designed to selectively bind to specific targets, such as proteins, lipids, nucleic acids, or other biomolecules, allowing for the detailed visualization of cellular components, pathways, and interactions. It is noted that in some embodiments the choice of LR and its specific formulation may be tailored to the sample type and the research objectives, offering the flexibility to highlight a wide variety of biological and tissue features. In some embodiments, the reagent subsystem (3) is equipped to facilitate the simultaneous or sequential application of multiple Labelling Reagents (LRs), for instance supporting multi-colour labelling techniques. This capability may allow for the concurrent visualization of multiple targets within a single sample, providing a comprehensive overview of the sample's composition and dynamics. The subsystem (3) may include features such as multi-compartment reagent containers, precision delivery systems, and environmental controls to ensure the optimal conditions for the labelling reagents. Similarly, the sample subsystem (1) may comprise adequate control mechanisms for labelling conditions, such as appropriate pH, temperature, and incubation times. Moreover, in some embodiments the system (100) might incorporate imaging and analysis tools that are compatible with the specific labels used, including fluorescence microscopy, confocal microscopy, or other advanced imaging modalities, allowing for an evaluation of the labelling procedure before removing the samples (12) from the system (100).

It is also noted that the system (100) is preferably adjusted to employ a low quantity of LRs, such as antibodies, therefore saving an expensive resource. Thus, the sizes, lengths, diameters, blind spots of the channels or communication means may be optimized to save resources and require a lower amount of antibody, such as by employing small diameter (5 mm, 3 mm, 2 mm, 1 mm or less) and/or microfluidic channels connecting to LR containers (30), and reducing the length of said channels to reduce the volume required for circulation, such as for instance 5 cm, 10 cm, 15 cm, 30 cm, 50 cm or less.

Advantageously, the integration of a Labelling Reagent (LR) within the Reagent Subsystem (3) significantly enhances the system's utility in research and diagnostic applications. By enabling precise targeting and visualization of specific sample (12) components, the system (100) facilitates a deeper understanding of biological processes, material compositions, and disease pathologies. Furthermore, the system (100) and its multi-channel subsystems (20), by being optimized to require the minimum amount of reagents, preferably of LR, more preferably of antibodies, avoids wasting a precious resource.

In a preferred embodiment of the first aspect of the invention a LER is comprised in one or more reagent containers (30) of the reagent subsystem (3), wherein the LER comprises, consists of, or consists essentially of one or more of the reagents from the list consisting of: N,N,N,N-tetrakis(2-hydroxypropyl)ehylenediamine, Urea, Triton X-100, Methanol, Chloroform, Ethanol, Isopropanol, Hexane, Diethyl Ether, Acetone, Dichloromethane, Ethyl Acetate, Petroleum Ether, Toluene, Pyridine, Dioxane, Naphta, Xylene, Cyclohexane, Benzene, Dimethyl Sulfoxide (DMSO), Dimethyl Formamide (DMF), Methyl Ethyl Ketone (MEK), Tetrahydrofuran (THF) and Methyl tert-butyl ether (MTBE). It is noted that other types of LER may be comprised in a reagent container (30) of the reagent subsystem (3).

Preferably, a LER of the reagent subsystem (3) comprises at least one of N,N,N,N-tetrakis(2-hydroxypropyl)ehylenediamine, Urea and Triton X-100.

More preferably, a LER of the reagent subsystem (3) comprises N,N,N,N-tetrakis(2-hydroxypropyl) ehylenediamine, Urea and Triton X-100.

In a preferred embodiment of the first aspect of the invention a BR is comprised in one or more reagent containers (30) of the reagent subsystem (3),, wherein the BR comprises, consists of, or consists essentially of one or more of the reagents from the list consisting of: Hydrogen Peroxide (H2O2), Sodium Hypochlorite (NaClO), Potassium Permanganate (KMnO4), Sodium Borohydride, Oxalic Acid, Formic Acid, Chloral Hydrate, Ethanol, Acetic Acid, Calcium Hypochlorite, Phenol and Hydroquinone, preferably wherein the BR comprises, consists of, or consists essentially of $H_2O_2$. It is noted that other types of BR may be comprised in one or more reagent containers (30) of the reagent subsystem (3).

In a preferred embodiment of the first aspect of the invention a RIR is comprised in one or more reagent containers (30) of the reagent subsystem (3), wherein the RIR comprises, consists of, or consists essentially of one or more of the reagents from the list consisting of: 2,2'-thiodiethanol (TDE), Glycerol, n-Butyl Alcohol, Benzyl Alcohol, Benzyl Benzoate and Methyl Salicylate, preferably wherein the RIR comprises, consists of, or consists essentially of TDE. It is noted that other types of RIR may be comprised in one or more reagent containers (30) of the reagent subsystem (3).

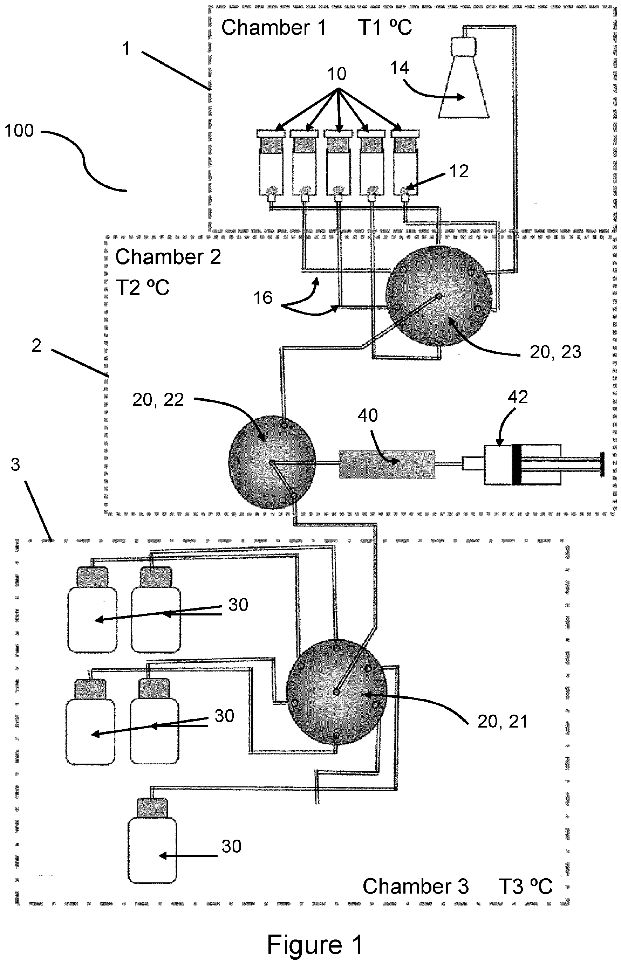

In a preferred embodiment of the first aspect of the invention, the one or more multi-channel subsystems (20) comprise a multi-channel reagent selection subsystem (21) in fluid communication with the one or more reagent containers (30). For an example of different embodiments see figures 1, 2 and 3.

It is noted that a multi-channel reagent selection subsystem (21) allows for a selective and precise delivery of reagents to the sample, enhancing the system's versatility and efficiency in sample processing. In some embodiments the multi-channel reagent selection subsystem (21) may be implemented through a variety of mechanisms, such as multivalve systems, multiport selectors, or programmable microfluidic devices. These mechanisms are designed to selectively establish fluidic pathways between the reagent containers (30) and the desired output, such as, but not limited to, another multi-channel subsystem like a sample multi-channel subsystem (23), a multi-channel connecting subsystem (22), or the sample containers (10). In some embodiments a exhaust port may be comprised within the multi-channel subsystems (20), such as the multi-channel reagent selection subsystem (21), allowing maintaining air pressure balance and/or to safely evacuate any fumes or vapours generated during the reagent handling process. The materials used in the construction of the multi-channel subsystems (20) and the multi-channel reagent selection subsystem (21) are selected for their chemical resistance and mechanical robustness. Options include, but are not limited to, Teflon, polyethiletherketone (PEEK), polytetrafluoroethylene (PTFE), polyvinylidene fluoride (PVDF), and stainless steel. Components of the multi-channel subsystems (20) may comprise in some embodiments motors, rotors, actuators, electronic or mechanical valves, flaps, pumps, such as peristaltic or syringe pumps, electronic control units, potentially incorporating microcontrollers or programmable logic controllers (PLCs), may be integrated in some embodiments to automate the selection and delivery processes. It is noted that these electronic controls may be programmed to execute predefined reagent delivery protocols or to adapt to real-time feedback from sensors monitoring the sample processing. Some other embodiments may incorporate advanced features such as feedback-controlled flow rates, pressure sensors to detect blockages or leaks, and temperature control mechanisms to maintain optimal reagent conditions.

Advantageously, the incorporation of a multi-channel reagent selection subsystem (21) within the system (100) expands its functionality, allowing for complex reagent handling protocols to be executed with high precision and minimal manual intervention. The capability to selectively connect to different reagent containers allows for a high degree of flexibility in sample processing, enabling the sequential or simultaneous application of multiple reagents without the need for manual intervention. This capability facilitates a more streamlined and automated sample preparation process, enabling faster throughput and reduced potential for human error. The system's flexibility in reagent selection is a highly versatile tool for research and diagnostic laboratories, adapting to a wide range of sample types and analysis techniques.

In a preferred embodiment of the first aspect of the invention, the one or more multi-channel subsystems (20) comprise a multi-channel sample selection subsystem (23) in fluid communication with the one or more sample containers (10). For an example of a multi-channel sample selection subsystem (23) see figure 1.

It is noted that a multi-channel sample selection subsystem (23) enables the selective and accurate transfer of reagents to different samples (12). In some embodiments, the multi-channel sample selection subsystem (23) may comprise a diversity of mechanisms, such as multi-valve systems, multiport selectors, or advanced programmable microfluidic devices. These mechanisms may be configured to establish controlled fluidic pathways between the sample containers (10) and other components of the system, such as, but not limited to, another multi-channel subsystem (20) like the multi-channel reagent selection subsystem (21), a multi-channel connecting subsystem (22), the waste disposal unit (14) or directly to analysis or processing units. Additionally, in some embodiments the subsystem (23) may comprise an exhaust port within the multi-channel sample selection subsystem (23) that may serve to maintain air pressure balance and/or facilitate the safe evacuation of any gases or vapours that emerge during sample manipulation. It is noted that the materials selected for the construction of the multi-channel sample selection subsystem (23) are preferably characterized by their chemical resistance and structural integrity. Suitable materials may be, but are not limited to, Teflon, polyethylene ether ketone (PEEK), polytetrafluoroethylene (PTFE), polyvinylidene fluoride (PVDF), and stainless steel. Again, it is noted that in some embodiments the components comprised in the multi-channel subsystems (20), such as the sample selection subsystem (23), may encompass motors, rotors, actuators, electronic or mechanical valves, pumps (e.g., peristaltic or syringe pumps), and electronic control units. These units may comprise in some embodiments microcontrollers or programmable logic controllers (PLCs), that can automate the selective transfer of reagents towards and/or outwards of the sample containers (10). It is further noted that in some embodiments these electronic controls may be programmed to follow predefined sample handling protocols or adjust to real-time feedback from sensors that monitor the processing stages. Some other embodiments may comprise feedback-controlled flow rates, pressure sensors to identify blockages or leaks, and temperature control systems to preserve optimal sample conditions throughout processing.

Advantageously, the incorporation of a multi-channel sample selection subsystem (23) within the system (100) significantly broadens its operational scope, allowing for intricate incubating protocols to be implemented with unparalleled precision and minimal manual involvement. The ability to selectively interact with various sample containers (10) enhances the system's flexibility in contacting

one or more samples (12) with one or more reagents, supporting both sequential and simultaneous sample processing without necessitating manual handling. This feature streamlines the sample preparation workflow, enabling higher throughput and minimizing the risk of human error, thereby making the system an invaluable asset for research and diagnostic labs dealing with diverse sample types and analytical requirements.

In a preferred embodiment of the first aspect of the invention, the system (100) further comprises a multi-channel connecting subsystem (22) in fluid communication with the multi-channel reagent selection subsystem (21) and with the multi-channel sample selection subsystem (23). For an example of different embodiments see figures 1, 2 and 3.

It is noted that, in some embodiments, the multi-channel connecting subsystem (22) may also be in fluid communication with a fluid pump (42) and/or a solvent reservoir (40). The multi-channel connecting subsystem (22) may incorporate a variety of mechanisms to enable this fluid communication, including, but not limited to, multi-valve systems, multiport selectors, or advanced programmable microfluidic devices. In some embodiments these mechanisms may establish controlled pathways, not only between the reagent (3) and sample (1) subsystems but also optionally with additional components such as a fluid pump (42) for driving fluid flow or a solvent reservoir (40) for supplying or diluting reagents. Furthermore, in some embodiments an exhaust port may be included within the multi-channel connecting subsystem (22), for instance to maintain air pressure balance and facilitate the safe evacuation of gases or vapors that may arise during the operation. Materials selected for constructing the multi-channel connecting subsystem (22) are chosen for their durability, chemical resistance, and ability to maintain structural integrity under various operational conditions. Suitable materials include, but are not limited to, Teflon, polyethylene ether ketone (PEEK), polytetrafluoroethylene (PTFE), polyvinylidene fluoride (PVDF), and stainless steel. In some embodiments the connecting subsystem (22) may comprise rotors, actuators, electronic or mechanical valves, and/or pumps (e.g., peristaltic or syringe pumps), among other components. Said components, in some embodiments may be controlled by electronic control units. These units may integrate microcontrollers or programmable logic controllers (PLCs) to automate the fluid transfer processes. For instance, they may be programmed to follow predefined protocols or adapt based on real-time feedback from sensors monitoring various stages of the sample and reagent handling process. Some embodiments may comprise features such as feedback-controlled flow rates, pressure sensors for blockage or leak detection, and temperature control systems.

Advantageously, the inclusion of a multi-channel connecting subsystem (22) within the system (100) significantly enhances its functional range, enabling sophisticated coordination between reagent and sample processing steps with high precision and minimal manual intervention. The capacity to seamlessly integrate reagent and sample flow between subsystems (21 and 23), and optionally with a fluid pump (42) and/or solvent reservoir (40), streamlines the overall workflow. This integration not only facilitates higher throughput but also reduces the potential for human error, positioning the system as an indispensable tool for laboratories engaged in complex research and diagnostic tasks involving diverse sample types and analysis methodologies, particularly if they employ clearing methodologies.

In a preferred embodiment of the first aspect of the invention, the system (100) further comprises a solvent reservoir (40) in fluid communication with the multi-channel connecting subsystem (22), preferably wherein the solvent reservoir (40) is at room temperature.

The solvent reservoir (40) is preferably configured to facilitate the preparation of reagents before their introduction to the sample subsystem (1). In some embodiments it may comprise materials that ensure chemical compatibility and structural integrity, such as glass, stainless steel, or chemically resistant plastics like Teflon, PTFE or PEEK. It is noted that the reservoir (40) may accommodate a variety of sizes and shapes to match system requirements, for example it may have a capacity of between 1 ml and 1000 ml, preferably between 10 ml and 500 ml, more preferably between 20 ml and 250 ml. It is further noted that in some embodiments additional solvents may be employed and/or may be comprised in a pump (42) and/or in the solvent reservoir (40), such as, but not limited to, water, distilled water, alcohol such as methanol or ethanol, Xylene, Benzene, Chloroform, Toluene and different types of oils. The solvent reservoir (40) may be kept at a predefined temperature, preferably a temperature in between the temperature at which the reagents are kept and the temperature at which the samples (12) are kept. In some embodiments, the solvent reservoir (40) may be kept at room temperature, allowing reagents to get to temperatures closer to the sample (12) temperatures, thereby reducing thermal shock and potential sample damage. Additionally, in some embodiments the solvent reservoir (40) may be placed between the multi-channel connecting subsystem (22) and a pump (42), acting as a contamination mitigation measure, preventing direct contact of the reagents with the pump components, which could lead to cross-contamination or damage to the pump.

Advantageously, the inclusion of a solvent reservoir (40) in fluid communication with the multi-channel connecting subsystem (22) significantly enhances the system's (100) functionality and efficiency. By facilitating, in some embodiments, the temperature equilibration of reagents to room temperature, the system ensures that the samples are processed under optimal conditions, improving the reliability and consistency of results. Furthermore, in some embodiments the solvent reservoir's placement helps in protecting a pump (42) from potential contamination, extending the life of the system's components and maintaining the integrity of the sample processing.

In a preferred embodiment of the first aspect of the invention, the system (100) further comprises a fluid pump (42), preferably wherein said fluid pump (42) is in fluid communication with the solvent reservoir (40) or with one of the multi-channel subsystems (20). In some embodiments the fluid pump (42) is in fluid communication with the multi-channel connecting subsystem (22).

The fluid pump (42) may be embodied in various forms, such as, but not limited to, syringe pumps, peristaltic pumps, diaphragm pumps, or gear pumps, each offering unique advantages in terms of precision, flow rate control, and suitability for different types of fluids. It is noted that the fluid pump (42) may comprise an electronic control unit or be connected to one. Materials for the fluid pump (42) in some embodiments are selected based on chemical compatibility with the solvents and reagents used within the system, such as, but not limited to, stainless steel, PTFE, or PEEK for components in direct contact with the fluids.

Advantageously, the inclusion of a fluid pump (42) allows for controlled and precise delivery of solvents or reagents, directly contributing to the system's overall efficiency and reliability.

In a preferred embodiment of the first aspect of the invention, the system (100) further comprises a solvent subsystem (2) comprising the solvent reservoir (40) and any combination of the multi-channel reagent selection subsystem (21), multi-channel sample selection subsystem (23) and/or the multi-channel connecting subsystem (22), wherein the solvent subsystem (2) is preferably kept at room temperature or encased in a chamber at room temperature.

It is noted that the solvent subsystem (2) is preferably defined by walls that separate it from the sample (1) and reagent (3) subsystems, allowing it to keep particular and/or optimal conditions of pressure, temperature, humidity, light, and atmospheric composition. Furthermore, the solvent subsystem (2) may comprise fume hoods, air vents, filters and/or ventilation, among other options.

Advantageously, comprising a separate subsystem (2) for the solvent allows a separation of ambient conditions between the solvent subsystem (2) and the sample (1) and reagent (3) subsystem, wherein each of them may thus be kept at different conditions of pressure, temperature, humidity, light, and atmospheric composition, but optimal in each case. Separating the subsystems (1, 2, 3) also allow for damage control in case of leakage or unwanted chemical reactions, fires or any type of damage that may happen in one of the subsystems (1, 2, 3).

In a preferred embodiment of the first aspect of the invention, the system (100) further comprises a temperature control unit for the sample subsystem (1), wherein the sample subsystem (1) is preferably thermally isolated and/or encased, more preferably wherein the sample subsystem (1) temperature is kept at about 37 degrees Celsius. It is noted that other temperatures may be selected to adapt to different types of tissues or biological samples, such as 35, 36 or 38 degrees, among other options.

Advantageously, this allows the samples to be kept at optimal biological tissue temperatures, which maintains better its structure and properties.

In a preferred embodiment of the first aspect of the invention, the system (100) further comprises a temperature control unit for the reagent subsystem (3), wherein the re-agent subsystem (3) is preferably thermally isolated and/or encased, more preferably wherein the reagent subsystem temperature is kept at about 4 degrees Celsius. It is noted that other temperatures may be selected to adapt to different reagents or to different freezing points of the reagents, such as, for instance, 1, 2, 3, 5, 6, 7, 8, 9 or 10 degrees Celsius, among other options.

Advantageously, this allows the reagents to be kept at optimal temperatures for conservation, which makes them last longer, and maintains better its properties.

In a preferred embodiment of the first aspect of the invention, the multi-channel reagent selection subsystem (21) is comprised in the reagent subsystem (3).

Advantageously, this way the system (100) can be made more compact and efficient, and the reagent handling is better isolated.

In a preferred embodiment of the first aspect of the invention, the multi-channel sample selection subsystem (23) is comprised in the sample subsystem (1). In some embodiments, however, the multi-channel sample selection subsystem (23) may be comprised in the solvent subsystem (2).

Advantageously, this way the system (100) can be made more compact and efficient, and the sample (12) handling is better isolated.

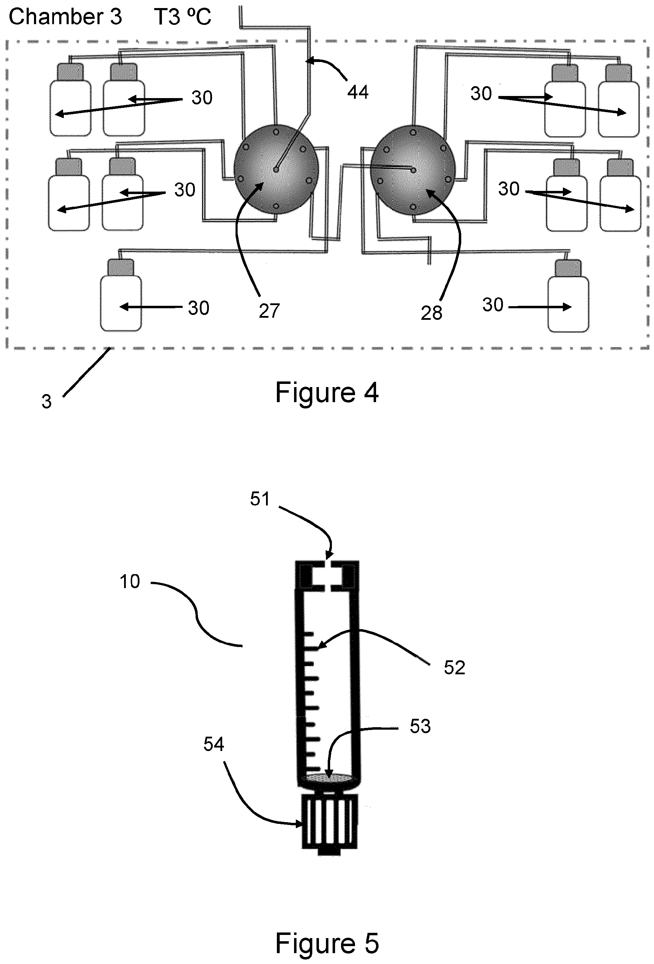

In a preferred embodiment of the first aspect of the invention, the multi-channel reagent selection subsystem (21) comprises one or more multivalve mechanisms (27, 28), preferably two or more multivalve mechanisms (27, 28). For an illustrative example of an embodiment, please see figure 4.

Advantageously, by comprising one or more multivalve mechanisms (27, 28), and any combinations of multivalve mechanisms (27, 28) and channels per each mechanism (27, 28) it is possible to hold any desired number of reagents, such as 2, 4, 8, 10, 12, 16, 20, 24, 30, 36, 48, 56, or any other bigger number or number in between.

In a preferred embodiment of the first aspect of the invention, the multi-channel sample selection subsystem (23) comprises one or more multivalve mechanisms (25, 26).

Advantageously, by comprising one or more multivalve mechanisms (25, 26), and any combinations of multivalve mechanisms (25, 26) and channels per each mechanism (25, 26) it is possible to hold any desired number of samples (12), such as 2, 4, 8, 10, 12, 16, 20, 24, 30, 36, 48, 56, or any other number in between or bigger.

In a preferred embodiment of the first aspect of the invention, the multi-channel sample selection subsystem (23) is in fluid communication with the waste disposal unit (14).

It is noted that a pump (42) may be employed to drive the waste reagents and/or samples from the sample containers (10) towards the waste disposal unit (14) through the multi-channel sample selection subsystem (23). In some other embodiments, instead it is the action of gravity that may drive the waste towards the waste disposal unit (14). It is also noted that this waste disposal unit (14) may be comprised by channels that connect to an external container or sewage or may comprise its own one or more containers.

Advantageously, the fluid communication between the waste disposal unit (14) and the multi-channel sample selection subsystem (23) streamlines the process of removing waste reagents and/or samples and automatizes it.

In a preferred embodiment of the first aspect of the invention, the system (100) further comprises a multi-channel sample disposal subsystem (26) in fluid communication with the one or more sample containers (10) and in fluid communication with the waste disposal unit (14).

Advantageously, by comprising a multi-channel sample disposal subsystem (26) in fluid communication with the one or more sample containers (10) it is not necessary for the waste to travel through the same channels used to provide the reagent into the sample containers, that is, through the multi-channel sample selection subsystem (23), therefore avoiding cross-contamination and separating for improved safety and cleanliness the input and output of fluid in the sample containers (10).

In a preferred embodiment of the first aspect of the invention, the one or more sample containers (10) comprise a filter (53) configured to keep the sample (12) in position while allowing reagents (30) to enter and exit the one or more sample containers (10). For an exemplary illustration of an embodiment comprising such a filter (53), see figure 5. Such a filter may for instance by a grid of stainless steel, Teflon, or PEEK, among other options, and is preferably incorporated at the bottom of the sample container (10).

Advantageously, this filter allows for keeping the samples (12) in place during the incubation, and also during the inflow and outflow of reagents and reagents waste.

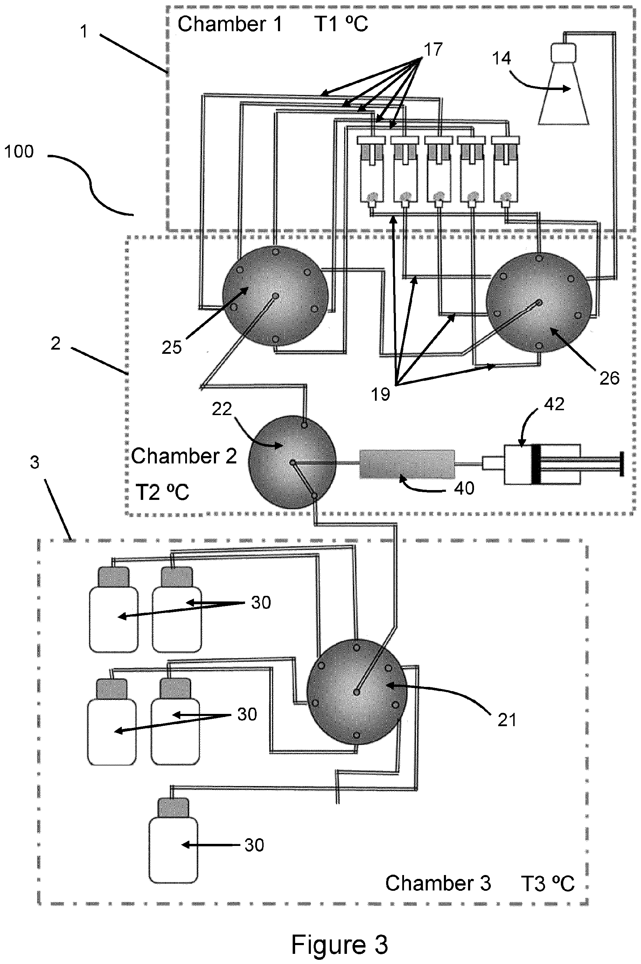

In a preferred embodiment of the first aspect of the invention, two or more sample containers (10) are in fluid communication with one channel of the sample selection subsystem (24), preferably through one or more multichannel connectors (18, 60). For an exemplary, non-limiting, illustration of an embodiment comprising such multichannel connector (18) see figure 3.

Advantageously, this multichannel allows for bulk treating of samples (12) by connecting several sample containers (10) to one channel of the sample selection subsystem (24), therefore it allows for providing a reagent to several samples (12) at the same time, allowing batch clearing of samples and reducing time while optimizing operation.

In a preferred embodiment of the first aspect of the invention, the system (100) further comprises tubing and connectors (54), wherein the tubing preferably comprises Teflon, PEEK, glass and/or stainless-steel tubes, and the connectors (54) preferably comprise finger-tight connectors.

It is noted that additional materials such as, but not limited to, silicone or PVC could be utilized in some embodiments for applications requiring flexibility or lower cost. The tubing could be configured in various shapes and sizes to accommodate different fluid volumes and flow rates, with options ranging from narrow capillary tubes for microfluidic applications to larger diameter tubes for bulk fluid transfer. Regarding the connectors, it is noted that in some embodiments alternatives such as compression fittings, barbed connectors, or quick-connect fittings could be employed based on the specific requirements for fluid tightness, pressure resistance, and ease of disconnection. Materials for these connectors might include the same as those for tubing, such as PEEK or stainless steel, to ensure compatibility and uniformity in chemical resistance across the fluid path.

Advantageously, the thoughtful selection of tubing and connector (54) materials, such as Teflon, PEEK, glass, and stainless steel, alongside the inclusion of various types of connectors, significantly broadens the system's applicability and durability. These materials allow for compatibility with a wide range of chemical reagents, minimizing the risk of reactive breakdown or contamination, and are resistant to the physical stresses encountered during system (100) operation. The use of finger-tight and other easy-to-use connectors enhances the system's flexibility, allowing for rapid reconfiguration and maintenance without compromising the integrity of fluid connections.

In a preferred embodiment of the first aspect of the invention, the sample subsystem (1) further comprises one or more substance mixers, preferably one or more orbital agitators.

It is noted that in some embodiments these substance mixers may comprise a variety of mechanisms such as magnetic stirrers, vortex mixers, orbital shakers, overhead stirrers, and/or ultrasonic agitators. Preferably, the substance mixers are orbital agitators, which offer gentle yet thorough mixing over a wide range of speeds and are particularly effective for samples that require simultaneous incubation and agitation.

Advantageously, the incorporation of such diverse mixing technologies within the sample subsystem (1) significantly enhances the system's (100) functionality, allowing for the precise and efficient preparation of samples (12). The availability of different types of mixers, preferably orbital agitators, allows the system to accommodate a broad spectrum of sample consistencies and mixing requirements, from gentle homogenization to vigorous agitation.

In a preferred embodiment of the first aspect of the invention, the system (100) further comprises a control unit with a processor and a memory comprising processor-executable instructions to operate the system (100), wherein the multi-channel subsystems (21, 22, 23, 24, 25, 26, 27, 28) are preferably controlled through level signal control or pulse signal control.

It is noted that in some embodiments, by comprising said control unit, enable in the system (100) the integration and synchronization of various processes within the system to achieve optimal performance. It is further noted that preferably the control unit's processor is capable of processing complex algorithms and managing multiple tasks simultaneously, allowing for real-time monitoring and adjustment of system parameters. The memory may store in some embodiments a comprehensive set of instructions that guide the operation of the multi-channel subsystems (21, 22, 23, 24, 25, 26, 27, 28), including but not limited to, the multi-channel reagent selection subsystem, multi-channel sample selection subsystem, and other related subsystems. These instructions enable the system to handle a wide array of procedures and clearing methods or steps within the methods, from fluid management to sample processing, with high precision and efficiency. Preferably, the multi-channel subsystems are controlled through level signal control or pulse signal control. Level signal control may involve the use of continuous or discrete signal levels to regulate the operation of the subsystems, allowing for smooth and steady adjustments to system parameters. Pulse signal control, on the other hand, may employ a series of on/off pulses to dictate the function of the subsystems, providing a method for precise control over the timing and duration of specific actions within the system.

Advantageously, the integration of a control unit with advanced processing capabilities and versatile signal control options significantly enhances the system's operational efficiency and reliability. The ability to precisely control the multi-channel subsystems through level or pulse signal control allows reagents and samples to be handled in an optimal manner, minimizing errors and maximizing throughput. This level of control also facilitates the automation of the procedures, reducing the need for manual intervention and thereby increasing the reproducibility of experiments. Furthermore, the flexibility offered by the control unit allows for easy adaptation to different experimental setups and protocols, broadening the range of applications that the system can support. This makes the system an invaluable tool for laboratories and facilities that require high precision, versatility, and efficiency in their operations.

Figures 1 to 3 show schematic drawings of different systems for biological sample processing, in particular for tissue clearing and optical analysis preparation protocols, according to one or more embodiments of the invention. It is noted that it is just a schematic drawing for illustrative purposes, and therefore the elements may not be at scale, and the number of elements may be a reduced simplification of the real magnitude or number of elements in a real system according to one or more embodiments of the invention. Similarly, the type of valves, recipients, fluid pumps and tubing employed may vary and what is depicted is just a schematic simplification of real elements. Furthermore, as it is for illustrative purposes some elements may have been omitted, such as electronic equipment, screens, microcontrollers, cables, or walls or cases to encase and contain the system. Similarly for figures 4 to 7, which depict elements of such systems according to one or more embodiments of the invention.

Figure 1 shows a schematic drawing of a system (100) according to one or more embodiments of the invention. Figure 1 displays three chambers, wherein chamber 1 corresponds to the sample subsystem (1), chamber 2 to the solvent subsystem (2) and chamber 3 to the reagent subsystem (3). It is noted that dotted lines delimit the three chambers, which in some embodiments may correspond to physical walls or containers, understanding, of course, that fluid communication among the chambers (1, 2 and 3) is conserved. The purpose of this delimitation is, among other reasons, to keep a stable temperature in each chamber (1, 2 and 3). Preferably, the temperature in chamber 1, T1, is around 37 degrees celsius, that is, near biological tissue temperature such as the temperature of a mammal or a human, and the temperature of chamber 3, T3, is preferably around 4 °C, that is, colder than room temperature to better conserve reagents without freezing them. Chamber 2 may optionally keep temperature T2, which is preferably near room temperature, as it serves as an intermediate step to bring the reagents to the temperature of the sample, however, in some other embodiments chamber 2 may be at lower or higher temperatures, and it may be controlled like in chamber 1 and 3 or just left in normal conditions of room temperature. Figure 1 shows a sample subsystem chamber (1) with five sample containers (10), each one containing a sample (12), and fluidly connected to a multivalve mechanism comprised in the multi-channel sample subsystem (23), which is part of the one or more multi-channel subsystems (20), and to a waste disposal unit (14) through the multi-channel sample subsystem (23). It is noted that the number of sample containers (10) may be different in some embodiments of the inventions, it may be bigger or smaller than 5, and the containers (10) may present the cylindrical shape of figure 1 or any other suitable shape. The fluid connectors (16) that connect each of the sample containers (10) to the multi-channel sample subsystem (23) may present different lengths or thicknesses than the ones represented in the figure, however in figure 1 it is noted that each sample container (10) is connected to a different port of the multivalve mechanism (23), thereby allowing an independent processing for each sample, which may be sequential or bulk depending on the opening and closing combination of the different valves of the multivalve mechanism of the multi-channel sample subsystem (23). The waste disposal unit (14) represented in figure 1 in some embodiments may be placed below the samples, and therefore the waste from the sample containers (10) may be disposed just by connecting the sample containers (10) to the waste disposal unit (14) through the multi-channel sample subsystem (23), without needing fluid pumps, evacuating the fluid just by the action of gravity. It is noted that even though in figure 1 the multivalve mechanism of the multi-channel sample subsystem (23) is comprised in chamber 2, in some embodiments said multivalve mechanism may be comprised in chamber 1 or 3. Similarly, the 2-way multivalve mechanism of the multi-channel connecting subsystem (22), that in figure 1 is comprised in chamber 2, in some other embodiments may be comprised in any of chambers 1 and 3, as the solvent reservoir (40) may still carry on its function being situated in chamber 2 even though the multi-channel connecting subsystem (22) was to be placed elsewhere, since the transport time would be short enough to not affect substantially the temperature of the fluid. Additionally, the multivalve mechanism of the multi-channel reagent selection subsystem (21) may be comprised in chamber 2 or chamber 1. One of the advantages of comprising separate chambers is the possibility to set different temperatures in each chamber. This way, chamber 1 may keep the samples (12) at a temperature T1, chamber 3 may keep the reagents at T3 degrees, and chamber 2 may keep the solvent reservoir (40) at T2 degrees, therefore the positioning of the connecting tubes and multi-channel subsystems (20) may vary in different embodiments while still keeping the same function, such as for instance keeping some or all the multi-channel subsystems (20) in one or another chambers. It is noted that in some other embodiments T1 may be equal to T2 or T3, or T3 equal to T2, or one temperature may be bigger or smaller than any of the other ones, depending on the temperature at which the samples need to be kept, or are desired to be kept. Similarly, T3 and T2 may have different values in some embodiments depending on at which temperature need the reagents and/or the solvent reservoir to be kept or at which temperature are they desired to be kept.

It is further noted that the multi-channel reagent selection subsystem (21) in figure 1 comprises a port which is open into the air, in order to maintain ambient pressure inside the multi-channel subsystem. The skilled person may employ other methods to keep pressure, such as using plungers in the reagent containers (30), and may employ different gases than air, such as nitrogen or other inert gases. In some embodiments any of the chambers 1, 2 or 3 may be kept at different pressures than ambient pressures, such as at smaller pressures by creating a vacuum to avoid contamination, and/or may be filled with nitrogen or any other gases, preferably inert gases. Therefore, comprising different chambers presents several advantages such as the possibility to set independent temperatures, pressures (including vacuum), or gaseous atmospheres, among other options, while also preventing fumes from the reagents to contaminate the samples.

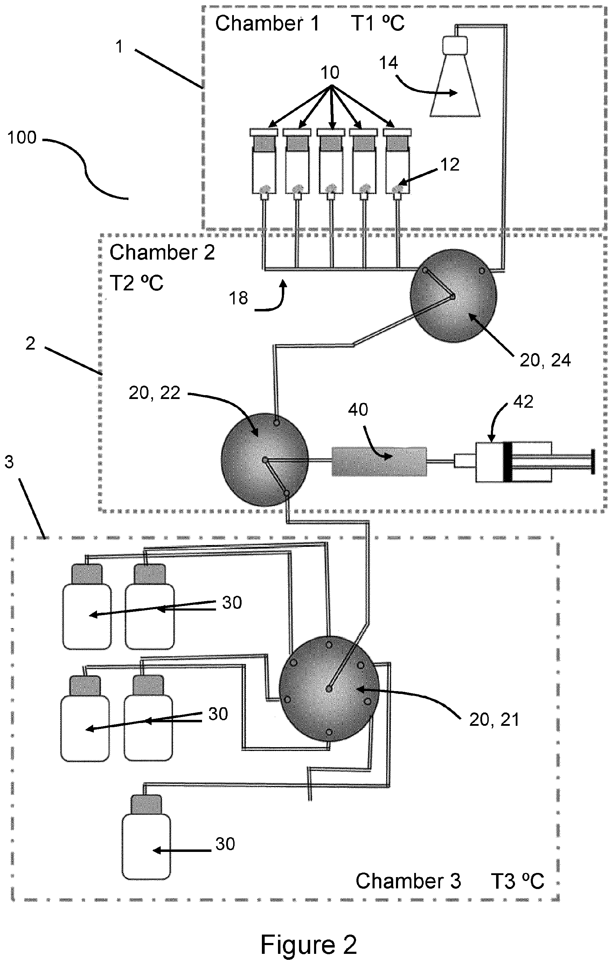

Figure 2 shows a schematic drawing of a system (100) according to one or more embodiments of the invention. The system (100) depicted in figure 2 is similar to the system (100) from figure 1, except from the multi-channel sample subsystem (23), which in this case is a 2-port sample subsystem (24) able to connect two ports together from three possible, in particular it comprises a port fluidly connected to a multi-channel connecting subsystem (22), a port fluidly connected to a waste disposal unit (14), and a port fluidly connected to the sample containers (10) through a sample multiport connector (18) that fluidly connects all sample containers (10) to the same port of the a 2-port sample subsystem (24), therefore allowing bulk processing of samples, as several samples may receive the same reagents at the same time. It is noted that in figure 2 it is shown 5 sample containers (10) and the sample multiport connector (18) therefore merges 5 channels into one, however in some embodiments of the invention this number of sample containers (10) and channels may vary, being bigger or smaller, such as 2, 3, 4, 6, 7, 8, 9, 10, 11, 12, 13, 14, 15, 16, etc. Additionally, in some embodiments of the invention any multi-channel subsystem may comprise any combination of multivalve mechanisms or multiport mechanisms, to be able to adapt to the desired number of sample and reagents containers. In some embodiments such as the one depicted in figure 2, the system (100) may be configured to perform batch sample processing, wherein said processing may comprise any combination of clearing steps such as bleaching, labelling, lipied extraction, decalcification, fixation and/or refractive index matching

Figure 3 shows a schematic drawing of a system (100) according to one or more embodiments of the invention. The system (100) depicted in figure 3 is similar to the system (100) from figures 1 and 2, except from the multi-channel sample selection subsystem (23 and 24, respectively), which in figure 3 comprises two multivalve mechanisms, 25 and 26, for input and output respectively. The input multivalve mechanism (25), which is some embodiments that comprise different mechanisms may be referred to as the multi-channel sample selection subsystem (25), is fluidly connected through a port to the multi-channel connecting subsystem (22), and is connected to the top of each of the sample containers (10) independently through top sample channels (17). The output multivalve mechanism (26), which is some embodiments that comprise different mechanisms may be referred to as the multi-channel sample disposal subsystem (26), is fluidly connected through a port to the input multivalve mechanism (25), wherein the channel that connects both multivalve mechanisms (25 and 26) is a solvent waste channel to dispose of solvent and/or reagents. The output multivalve mechanism (26) is also fluidly connected to the bottom of each of the sample containers (10) independently through bottom sample channels (19). Finally, the output multivalve mechanism (26) is fluidly connected to the waste disposal unit (14). The configuration depicted in figure 3 allows the reagents enter the sample containers (10) from a set of channels (17), and exit the sample containers through a different set of channels (19), which prevents contamination. It is noted that the schematic drawing depicted in figure 3 is only illustrative, and the connections top sample channels (17) may not be comprised at the top, but at the laterals, in some embodiments. Similarly the number of channels (17, 19) and sample containers (10) may be different than the ones represented in figure 3, and multivalve mechanisms (25 and 26) may be connected among them or not, and/or they may comprise exhaust ports, security valves, pumps, etc.

Figure 4 shows a schematic drawing of a chamber 3 of a system (100) according to one or more embodiments of the invention. The chamber 3 depicted in figure 4 is similar to the chamber 3 from figures 1, 2 and 3, except in that the multi-channel reagent selection subsystem (21) comprises two interconnected multi-valve mechanisms (27 and 28), in order to adapt to a bigger number of reagent containers than the ones comprised in figures 1 to 3. It is noted that in some embodiments the number of channels of the multi-channel reagent selection subsystem (21) or the one or more multi-valve mechanisms (27, 28) may vary, therefore one multi-valve mechanism may be fluidly connected to 1, 2, 3, 4, 5, 6, 7, 8, 9, 10, 11, 12, 13, 14, 15, 16 or more reagent subsystems, and/or it may be connected to any number of additional multivalve mechanisms (27, 28) wherein each may independently have a different number of ports and channels. Therefore, it is understood that any combination of multi-channel mechanisms, multi-valve mechanisms, and ports within each mechanism may be employed by the skilled person to adapt to the desired or needed number of reagent containers. Similar considerations may apply for the multi-channel sample subsystem (23) or multi-channel connection subsystem (22).

Figure 5 shows a schematic drawing of a sample container (10) of a system (100) according to one or more embodiments of the invention. The sample container (10) depicted in figure 5 is a non-limiting example, and the dimensions and aspect ratio may vary with respect to other embodiments, such as all the other embodiments of the system (100) depicted in any of the figures. In figure 5 a sample container (10) is displayed, wherein the sample container (10) comprises a ventilation orifice (51) at the top of the container. It is noted that in some embodiments said ventilation orifice may not exist, as for example in the case that an input channel (17) is connected to the top of a sample container (10). The sample container (10) in figure 5 also comprises a volume indicator (52), which may serve to estimate the volume of reagents needed to be used, a filter (53) that maintains the sample in position while permitting reagents coming in and out of the sample chamber, and a connector (54) so channels (16, 18, 19) for liquid flow can be attached to the sample compartment. It is noted that the samples inside the sample chamber may be agitated with a desired agitation speed and duration.

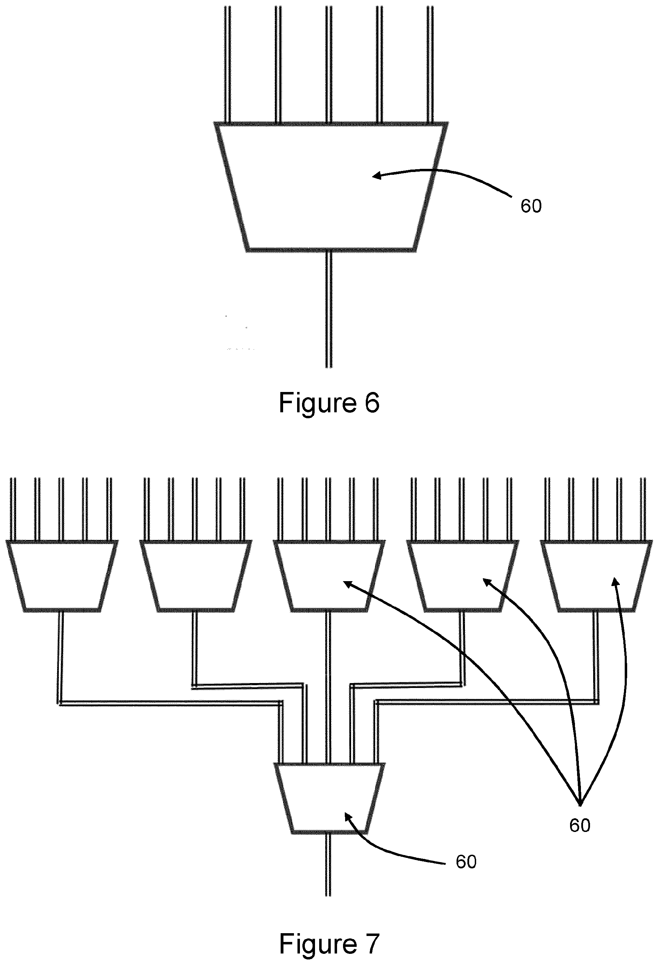

Figure 6 shows a schematic drawing of a multi-channel connector (60) of a system (100) according to one or more embodiments of the invention. It is noted that these multi-channel connectors are preferably made of stainless steel or PEEK material. It is also noted that the multi-channel connection may have one channel split into five channels (or five channels merged into one channel), or any other number such as 2, 3, 4, 6, 7, 8, 9, 10, 11, 12, 13, 14, 15, 16, among others.

Figure 7 shows a schematic drawing of a combination of multi-channel connector (60) of a system (100) according to one or more embodiments of the invention. It is noted that any type of combination of multichannel connectors (60) may be employed in the system (100) of the invention.

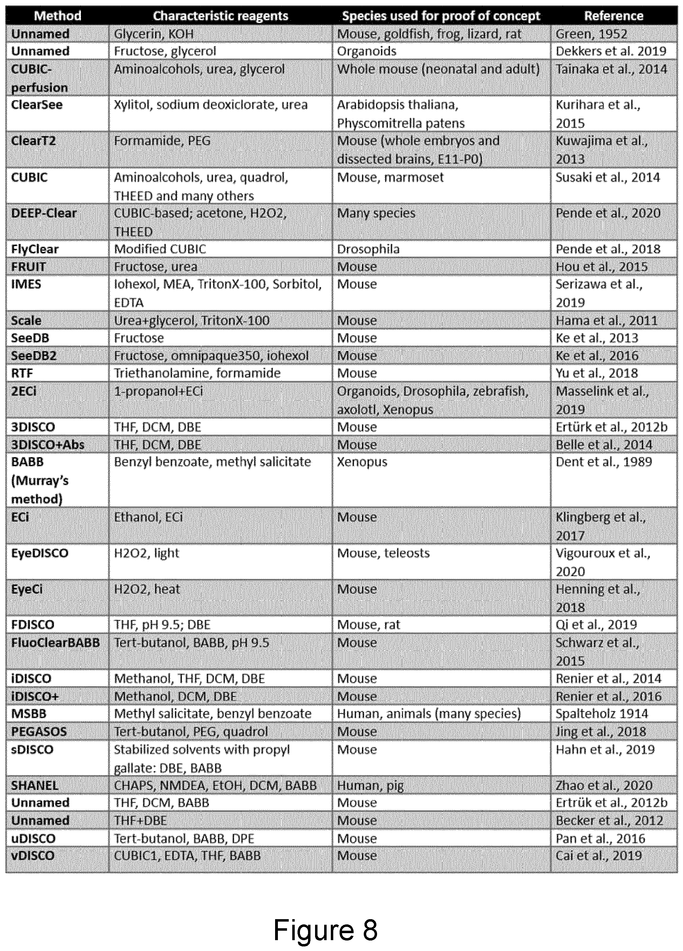

Figure 8 shows an exemplary table with clearing methods that may be used with the system (100) of the invention, preferably on human or animal tissue. However, the system (100) is not limited to these methods, or the reagents or way these methods are carried out, but it serves to illustrate the general purpose of the system (100) of the invention regarding applying clearing methods. Therefore, it is noted that in some embodiments of the invention, the system (100) may perform any of the bleaching, delipidation, fluorescence dye labelling and/or refractive index matching steps of at least the clearing methods displayed in figure 8, in an automatic and user unattended way.

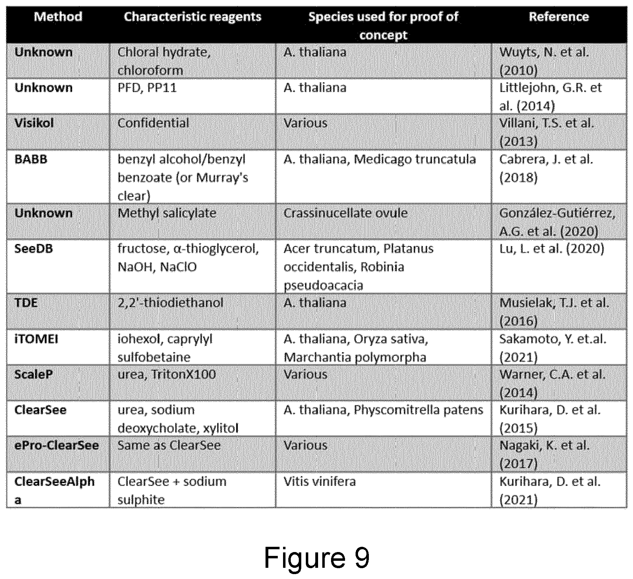

Figure 9 shows an exemplary table with clearing methods that may be used with the system (100) of the invention, preferably on plant tissues. However, the system (100) is not limited to these methods, or the reagents or way these methods are carried out, but it serves to illustrate the general purpose of the system (100) of the invention regarding applying clearing methods.

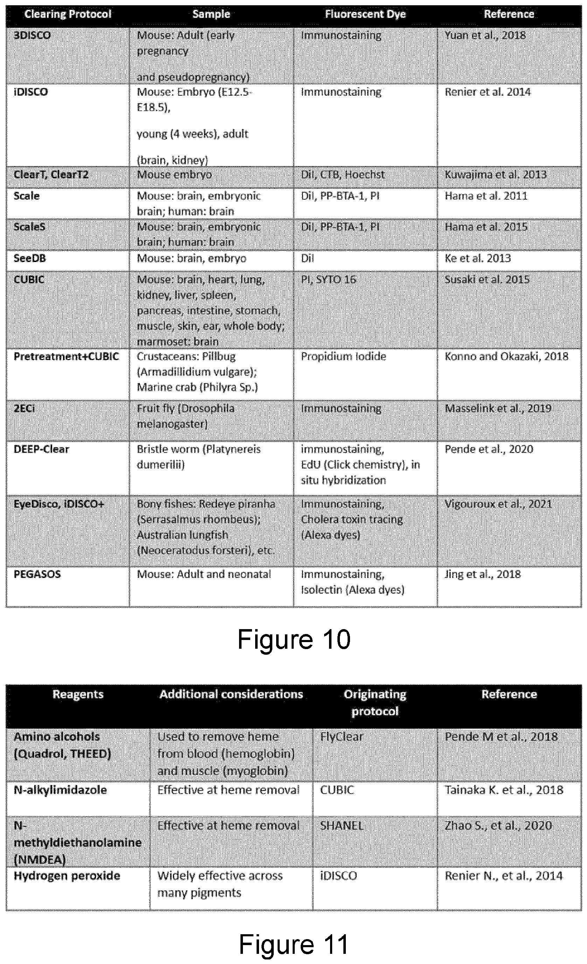

Figure 10 shows an exemplary table with fluorescence dye labelling methods that may be used with the system (100) of the invention. However, the system (100) is not limited to these methods, or the reagents or way these methods are carried out, but it serves to illustrate the general purpose of the system (100) of the invention regarding applying clearing methods. It is noted that the system (100) may be used for fluorescence dye labelling processes for cleared samples, like whole organs or embryos.

Figure 11 shows an exemplary table with bleaching and/or decolorization methods that may be used with the system (100) of the invention. However, the system (100) is not limited to these methods, or the reagents or way these methods are carried out, but it serves to illustrate the general purpose of the system (100) of the invention regarding applying clearing methods.

It is noted that te system (100) of the invention may be employed independently for any of the methods displayed in figures 8 to 12, as well as for many other bleaching, delipidation, fluorescence dye labelling and/or refractive index matching methods, for all of them together, or for any combination thereof.

Preferably, the system (100) is adapted to or configured to be used with samples between 0.1 mm and 100 mm in diameter, more preferably is adapted to or configured to be used with samples between 0.5 mm and 75 mm in diameter, even more preferably between 1 mm and 40 mm in diameter.

It is noted that cleared, translucent and/r transparent samples with the system (100) of the invention may be used in a wide variety of microscopy and imaging techniques, such as, but not limited to, confocal microscopy, two photon microscopy, optical coherence microscopy, scanning laser optical tomography, optical projection tomography, MRI and light sheet fluorescence microscopy or selective plane Imaging microscopy.

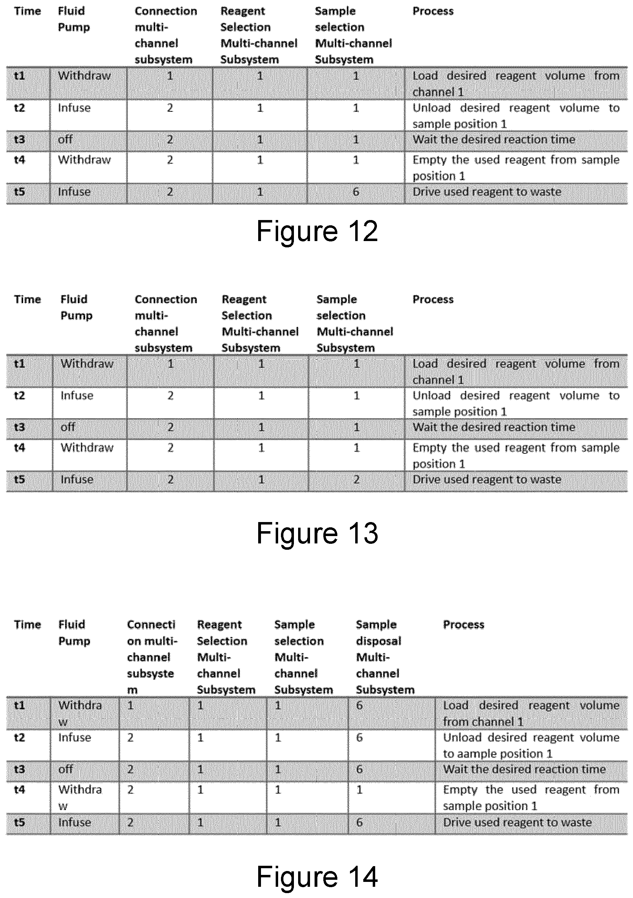

Figures 12, 13 and 14 summarize possible steps that may be performed in one or more embodiments of the system (100) of the invention. The system (100) is therefore not limited by these steps, and their purpose is merely illustrative of different pipelines and processes that can be carried out in one or more embodiments of the system (100). The timeline is defined through the "Time" column, wherein each step represents a time (t1, t2, t3, t4, t5 etc). In the embodiments depicted in Figures 12 to 14 there is one fluid pump (42), however in other embodiments there may be two or more, or one for each sub-system. The column titled "Fluid Pump" represents the state of the pump (42). For example, in the case that the fluid pump (42) is a syringe (42), "withdraw" would mean moving the plunger outside of the syringe, therefore creating a vacuum that drives the fluid towards the pump from the subsystem to which the multi-channel connection subsystem (22) has an open fluid connection to. Similarly, the term "infuse" means moving the plunger inside the syringe (42), therefore pushing the fluid away from the pump (42) and into the subsystem that has an open fluid connection to the multi-channel connection subsystem (22). The numbers in the columns "Connection multichannel subsystem", "Reagent selection multi-channel subsystem" and "Sample selection multi-channel subsyste"" refer to different ports that are open or different positions in a 2 or more port subsystem. For instance, the connection multichannel subsystem (22) from figures 1 to 3 and figures 12 to 14 is a 2-port subsystem (22) with two positions, 1 and 2, wherein position 1 connects the solvent reservoir (40) and the pump (42) to the multi-channel reagent selection subsystem (21), and position 2 connects the solvent reservoir (40) and the pump (42) to the multi-channel sample selection subsystem (23). However in other embodiment there may be other type of mechanisms or subsystems that comprise valves, more ports or a combination of mechanisms.

Figure 12 shows an example of a timeline table summarizing the steps that can be performed in a system (100) according to one or more embodiments of the invention to add a reagent from a first channel of the multi-channel reagent selection subsystem (21) to a first sample container of the multi-channel sample selection subsystem (23). The table of figure 12 also takes in consideration a step for waiting for a desired period of time for the reaction with the sample (10) and then a further step to remove the reagent from sample container 1 and drive it to the waste disposal unit (14). In figure 12, the port that connects the multi-channel sample selection subsystem (23) to the first sample container is referred to as number 1, and the port that connects the multi-channel sample selection subsystem (23) to the waste disposal unit (14) is referred to as number 6.

Figure 13 shows an example of a timeline table summarizing the steps that can be performed in a system (100) according to one or more embodiments of the invention, in particular suitable for a system (100) such as, but not limited to, the one shown in figure 2, to add a reagent from a first channel of the multi-channel reagent selection subsystem (21) in bulk to all the samples that are connected to a first port (or a first sample position). The table of figure 13 also takes in consideration a step for waiting for a desired period of time for the reaction with the sample (10) and then a further step to remove the reagent from the first sample container and drive it to the waste disposal unit (14). In some embodiments of the system (100) there may be more sample ports or sample positions, wherein each sample port may be fluidly connected to one or more sample containers, such as for independent and/or parallel batch sample processing. In figure 13, the port that connects the multi-channel sample selection subsystem (23) to the batch of sample containers (10) is referred to as number 1, and the port that connects the multi-channel sample selection subsystem (23) to the waste disposal unit (14) is referred to as number 2.

Figure 14 shows an example of a timeline table summarizing the steps that can be performed in a system (100) according to one or more embodiments of the invention, in particular suitable for a system (100) such as, but not limited to, the one shown in figure 3. The steps comprise adding reagent from a first channel of the multi-channel reagent selection subsystem (21) to a first sample container of the multi-channel sample selection subsystem (23). The table of figure 14 also takes in consideration a step for waiting for a desired period of time for the reaction with the sample (10) and then a further step to remove the reagent from the first sample container and drive it to the waste disposal unit (14). In figure 14, the port that connects the multi-channel sample selection subsystem (25) to the first sample container is referred to as number 1. Similarly, the port of the multi-channel sample disposal subsystem (26) that connects to the first sample container is referred to as number 1, and the port of the multi-channel sample disposal subsystem (26) that connects to the waste disposal unit (14) is referred to as number 6.

In a second aspect of the invention, a sample (12) clearing method is disclosed, wherein the method comprises a bleaching step and/or a refractive index homogenization step, wherein the bleaching step comprises contacting a fixed biological sample with hydrogen peroxide ($H_2O_2$), and wherein the refractive index homogenization step comprises contacting a fixed biological sample with 2,2'-thiodiethanol (TDE).

Preferably, the clearing method of the invention comprises a bleaching step and a refractive index homogenization step, wherein the bleaching step comprises contacting a fixed biological sample with hydrogen peroxide ($H_2O_2$), and wherein the refractive index homogenization step comprises contacting a fixed biological sample with 2,2'-thiodiethanol (TDE).

It is noted that the method of the invention may be performed using various concentrations of hydrogen peroxide, depending on the specific requirements of the biological sample in question. Alternatives to hydrogen peroxide for the bleaching step may comprise, but are not limited to, potassium permanganate, oxalic acid sodium hypochlorite, benzoyl peroxide, and ozone, alone or in combination.

It is also noted that alternatives to TDE for refractive index homogenization may comprise, but are not limited to, glycerol, sucrose solutions, and urea-based compounds. This step may be optimized by adjusting the concentration of TDE or alternative reagents to suit the specific optical properties desired. Using TDE, however, as is shown in example 1, can be used standalone to clear samples in an effective, simple and quick way. TDE in combination with a LER, as is shown in example 2, provides proficient clearing results, obtaining tissue samples and whole organs substantially transparent and/or translucent. TDE in combination with a LER and hydrogen peroxide, on the other hand, provides unparalleled results, even better in some instances than the state of the art method, while requiring several times less time to incubate and being more simple process, as is shown in example 4.

In some embodiments, the clearing method may additionally comprise thus a lipid extraction step prior to or following the bleaching step, preferably after the bleaching step, and before the refractive index homogenization step. Lipid extraction reagents (LER) that may be used in some embodiments comprise, but are not limited to, detergents such as Triton X-100, sodium dodecyl sulfate (SDS), or saponin. The choice of LER may depend on the type of tissue and the extent of lipid removal required. The lipid extraction step, as well as the refractive homogenization and bleaching steps, may involve several sub-steps, such as, but not limited to, incubation, agitation, and washing or rinsing, to ensure the correct step application.

It is noted that the method is applicable to a wide range of biological samples, comprising, but not limited to, tissues from animals, such as experimental animals, animal organs, human tissue samples, and/or plant tissues, among others. The versatility of the method is further enhanced by the possibility of adjusting the specific reagents and conditions used in each step to accommodate different sample types and clearing requirements, as well as the possibility of combining the method of the invention with additional steps, such as a calcium removal step, a labelling step and/or a fixative step, among other options.

Advantageously, the disclosed clearing method simplifies the process of making biological samples translucent and/or transparent for microscopic examination, significantly reducing the time required for sample preparation. By incorporating in some embodiments both a bleaching step and a refractive index homogenization step, the method provides a comprehensive approach to clearing, capable of effectively processing a wide variety of sample types. The use of TDE as a standalone refractive index reagent simplifies the process compared to existing methods, offering a streamlined approach that can achieve high-quality results in a reduced timeframe. Furthermore, the inclusion in some embodiments of a lipid extraction step allows for enhanced clearing efficiency, competing with current state of the art methods and even surpassing them in some instances.

In a preferred embodiment of the method of the second aspect of the invention, the method comprises a bleaching step, wherein the bleaching step comprises contacting a fixed biological sample with a composition in an amount and for a time sufficient to bleach the composition, that is, to completely or partially remove tints and/or pigments, the composition comprising, preferably consisting on:

i) hydrogen peroxide ($H_2O_2$); and
ii) a saline buffer solution, preferably phosphate buffered saline (PBS);

wherein the contacting results in the sample being significantly free of tints and/or pigments.

In a more preferred embodiment of the method of the second aspect of the invention, the saline buffer solution is phosphate buffered saline (PBS).

In an even more preferred embodiment of the method of the second aspect of the invention, the amount of hydrogen peroxide sufficient to bleach the composition is between 2 and 30% w/v and the time is at least 20 minutes, preferably wherein the amount of hydrogen peroxide sufficient to bleach the composition is between 5 and 15% w/v, and the time is between 20 minutes and 120 minutes, more preferably wherein the amount of hydrogen peroxide sufficient to bleach the composition is about 10% w/v, and the time is between 30 minutes and 60 minutes.

It is noted that w/v denotes weight per volume, which is a generally known way to express the concentration of a solute in a solution, and it refers to the mass of the solute divided by the volume of the solution in which it is dissolved. This concentration measurement is typically expressed as a percentage, indicating the grams of solute per 100 milliliters (mL) of solution.

In a preferred embodiment of the method of the second aspect of the invention, the method comprises a refractive index homogenization step, wherein the refractive index homogenization step is preferably the last step, and wherein the refractive index homogenization step comprises contacting a fixed biological sample with a composition in an amount and for a time sufficient to clear the composition, i.e., to make it at least partially transparent or translucent, the composition comprising, preferably consisting on:

  i) 2,2'-thiodiethanol (TDE); and
  ii) a saline buffer solution, preferably phosphate buffered saline (PBS);

wherein the contacting results in the sample being significantly translucent or at least partially transparent.

In a more preferred embodiment of the method of the second aspect of the invention, the saline buffer solution is phosphate buffered saline (PBS).

In an even more preferred embodiment of the method of the second aspect of the invention, the amount of TDE sufficient to clear the composition is between 50 and 99% w/v and the time is at least 10 hours, preferably wherein the amount TDE sufficient to clear the composition is between 70 and 98% w/v, and the time is between 15 hours and 48 hours, more preferably wherein the amount of TDE sufficient to clear the composition is about 97% w/v, and the time is between 20 hours and 30 hours.

In a preferred embodiment of the method of the second aspect of the invention, the method further comprises a lipid extraction step, wherein the lipid extraction step comprises contacting a fixed biological sample with a composition in an amount and for a time sufficient to totally or partially remove lipids, wherein the step for removing lipids from the biological sample is carried out prior to the bleaching step and the refractive index homogenization step.

In a preferred embodiment of the method of the second aspect of the invention, the lipid extraction step comprises contacting a fixed biological sample with a composition in an amount and for a time sufficient to totally or partially remove lipids, the composition comprising, preferably consisting on:

  i) Urea
  ii) Triton X-100
  iii) N, N, N', N'-tetrakis (2-hydroxy-propyl) ethylene-diamine)
  iv) distilled water (dH$_2$O)

In a more preferred embodiment of the method of the second aspect of the invention, the composition to remove the lipids is selected from any one of the following or any combination thereof:

  i) sodium dodecyl sulfate (SDS),
  ii) 3-(N,N-Dimethylmyristylammonio)propanesulfonate (SB3-14),
  iii) polysorbate 20,
  iv) t-octylphenoxypolyethoxyethanol, sodium deoxycholate, and a salt;
  v) N,N,N,N-tetrakis(2-hydroxypropyl)ehylenediamine, and a salt, preferably NaCl, and optionally Urea and triton X-100.

In an even more preferred embodiment of the method of the second aspect of the invention, the composition for lipid extraction comprises about 10% to about 30% (weight:volume) of N,N,N,N-tetrakis(2-hydroxypropyl)ehylenediamine and, preferably, from about 15 to 35% w/v of urea and from about 10 to 20% w/v of triton X-100.

It is noted that the composition may comprise distilled water until completing the 100 %. For instance if the composition comprises a 10 % w/v of N,N,N-tetrakis(2-hydroxypropyl)ehylenediamine, a 15 % w/v of urea and a 10 % w/v of triton X-100, then it may comprise a 65 % w/v of distilled water. It is noted that other compositions herein mentioned may also comprise distilled water until completing the 100 %.

In a preferred embodiment of the method of the second aspect of the invention, the biological sample (12) is from a multicellular eukaryote, preferably wherein the biological sample is from a human or animal, more preferably the biological sample is an organ, a tissue, or a cell from a human or animal, even more preferably from a laboratory testing animal.

In a preferred embodiment of the method of the second aspect of the invention, the biological sample (12) is an organ selected from the group consisting of: heart, blood vessels, salivary gland, oesophagus, stomach, liver, gallbladder, pancreas, intestine, colon, rectum, anus, endocrine gland, adrenal gland, kidney, ureter, bladder, lymph node, tonsils, adenoid, thymus, spleen, skin, muscle, brain, spinal cord, nerve, ovary, fallopian tube, uterus, vagina, mammary gland, testes, prostate, penis, pharynx, larynx, trachea, bronchi, lung, diaphragm, cartilage, ligaments, and tendon.

In a more preferred embodiment of the method of the second aspect of the invention, the amount of hydrogen peroxide sufficient to bleach the sample in the bleaching step is about 10% w/v and the time is between 30 minutes and 60 minutes, wherein the step for removing lipids from the biological sample is carried out after the step of bleaching the composition with a composition comprising about 10% to about 30% (weightvolume) of N,N,N,N-tetrakis(2-hydroxypropyl) ehylenediamine and preferably from about 15 to 35% w/v of urea and from about 10 to 20% w/v of triton X-100, and wherein the refractive index homogenization step is carried out after the lipid removal step, wherein the amount of TDE in the refractive index homogenization step is about 97% w/v, and the time is between 20 hours and 30 hours.

In a preferred embodiment of the method of the second aspect of the invention, the method further comprises a labelling step, wherein the labelling step is performed before the refractive index homogenization step, after the lipid extraction step and after the bleaching step, whenever said steps are performed on the method, and wherein the labelling step comprises haematoxylin and eosin staining and/or immunostaining, preferably wherein immunostaining comprises immunohistochemistry and/or immunofluorescence techniques.

In a preferred embodiment of the method of the second aspect of the invention, the method further comprises a decalcification step, wherein the decalcification step is the first step.

In a preferred embodiment of the method of the second aspect of the invention, the method further comprises a fixation step, preferably wherein the fixation step is the first step.

It is noted that preferably, the chronological order of the steps is the following:

1. Calcium removal step
2. Bleaching step
3. Lipid extraction step
4. Labelling step
5. Refractive index homogenization step

Wherein a Fixative Reagent (FR) step may optionally be performed before step 1 (CRR).

However, it is also noted that the bleaching step and the lipid extraction step may exchange order positions, such as in:

1. Calcium removal step
2. Lipid extraction step
3. Bleaching step

4. Labelling step
5. Refractive index homogenization step

Wherein a Fixative Reagent (FR) step may optionally be performed before step 1 (CRR).

Therefore, it is noted that the order of the lipid extraction step and the bleaching step are interchangeable. Additionally, in some embodiments the bleaching step is skipped.

It is also noted that if one or more steps are not performed, the order of the steps would remain the same. For instance, if the calcium removal step and the bleaching step is not performed, the chronological order of the steps would remain:

1. Lipid extraction step
2. Labelling step
3. Refractive index homogenization step

In a third aspect of the invention, a kit of parts is disclosed, wherein a first component of the kit comprises:

i. a sample subsystem (1) comprising one or more sample containers (10);

ii. a reagent subsystem (3) suitable for accommodating one or more reagent containers (30), preferably wherein the reagent subsystem (3) presents a volume at least enough to accommodate one reagent container (30), more preferably a volume enough to accommodate two, three, four, five, six, ten, twelve, twenty or more reagent containers (30), wherein each reagent container preferably has a volume of at least 30 ml, preferably at least 50 ml, 100 ml, 150 ml, 250 ml, 500 ml, 750 ml, 1L, 2 L or more.;

iii. one or more multi-channel subsystems (20) in fluid communication with the sample subsystem (1) and the reagent subsystem (3);

iv. optionally, a waste disposal unit (14), preferably comprised in the sample subsystem (1);

and wherein a second component of the kit comprises the one or more reagent containers (30), wherein said reagent containers (30) comprise at least a Lipid Extraction Reagent (LER) and, optionally, at least one of the reagents selected from the list consisting of: a Fixative Reagent (FR), a Calcium Removal Reagent (CRR), a Bleaching Reagent (BR), a Labelling Reagent (LR) and a Refractive Index Reagent (RIR).

It is noted that the sample subsystem (1), the reagent subsystem (3), the one or more ulti-channel subsystems (20), the waste disposal unit (14), the LER, the FR, the CRR, the BR, the LR and the RIR of the kit of parts may comprise any feature described for the system (100) of the first aspect of the invention. Additionally, the kit of parts may comprise any feature of the system (100) according to the first aspect of the invention above described.

A fourth aspect of the invention discloses an in vitro use of a system for tissue sample (12) clearing, wherein sample clearing preferably comprises rendering the sample substantially translucent and/or substantially transparent, and wherein the system comprises:

i) a sample subsystem (1) comprising one or more sample containers (10);

ii) a reagent subsystem (3) suitable for accommodating one or more reagent containers (30), preferably wherein the reagent subsystem (3) presents a volume at least enough to accommodate one reagent container (30), more preferably a volume enough to accommodate two, three, four, five, six, ten, twelve, twenty or more reagent containers (30), wherein each reagent container preferably has a volume of at least 30 ml, preferably at least 50 ml, 100 ml, 150 ml, 250 ml, 500 ml, 750 ml, 1L, 2 L or more.;;

iii) one or more multi-channel subsystems (20) in fluid communication with the sample subsystem (1) and the reagent subsystem (3);

iv) optionally, a waste disposal unit (14), preferably comprised in the sample subsystem (1);

It is noted that the system (100) of the first aspect of the invention may also be used in vitro for tissue sample (12) clearing. It is also noted that the tissue sample (12) may be of animal or plant origin, preferably it is a human tissue or an experimental animal tissue and/or whole organ.

A fifth aspect of the invention discloses a computer executable program comprising processor or computer readable instructions which, when the program is executed by a processor or a computer, cause the processor or computer to operate the system (100) or the kit of parts according to any of the previous claims. Preferably, the computer executable program is stored in a memory.

**Examples**

**Materials and methods**

Tissues

*Mice*

All the experimental procedures were approved by the hospital's Ethics Committee for Drug Research (*Comité Ético de Investigación con Medicamentos,* CEIm), Ethics Animal Committee (*Comité Ético de Experimentación Animal,* CEEA) and were carried out in full compliance with ARRIVE guidelines.

C57BU6 mice, 8-10-weeks-old, weighting 25-30 g, housed in an air-conditioned room with a 12 h light/dark cycle and free access to water and chow were used in this study.

Adult male LysMcre$^{+/-}$, mT/mG mice (N=3) were also used in this study and maintained in similar conditions. These mice express membrane-targeted tandem dimer (Td) Tomato (a red fluorescent protein) in all cells except for those with a myeloid cell lineage, which instead express membrane-targeted enhanced green fluorescent protein (EGFP). Further information can be found in [1], [2].

*Biological samples*

The hospital's Immunoregulation Laboratory, Pediatric Cardiology Service and Infantile Cardiac Surgery Service provided human infant thymus samples with all the required informed consent and confidentiality reports, and with the approval of the CEIm and Biosecurity Committee. These samples are sourced from pediatric patients undergoing surgery as treatment for cardiovascular pathologies. The size of the thymus on infants blocks access to the affected areas, therefore needing to be excised as part of the process.

Samples were incubated in 4% (w/v) paraformaldehyde (PFA) in phosphate buffered saline (PBS) $1\times$ for fixation, and then stored in stored in Sodium Azide 0.02% in PBS $1\times$ at 4°C for preservation until their further analysis.

*Sample processing*

Animals were sacrificed by transcardial perfusion. Prior to perfusion, a ketamine/xylazine mixture was administered via intraperitoneal injection to deeply anesthetize the animals. The heart was perfused with 15 ml of PBS $1\times$ to flush blood out of the animal's vessels, followed by 40 ml of 4% PFA in PBS $1\times$ for fixation.

The organs were excised and incubated in PFA 4% for 24h at 4°C. Stomach and intestines were manually cleared of partially digested food whenever possible to avoid their interference on the clearing process. Samples were then rinsed with PBS and until processed.

For the modified perfusion-based clearing protocol, the standard perfusion protocol was applied, followed by perfusion with 40 mL of Lipid Extraction Reagent (LER) and 10 mL of 10% w/v hydrogen peroxide ($H_2O_2$) solution (where applicable). Samples were then immersed in LER.

Tissue clearing and immunohistochemistry

*Standard tissue clearing reagents*

The standard tissue clearing protocol is composed of two separate steps with their corresponding reagents: the first reagent (standard LER, or Reagent 1 from CUBIC protocol) removes lipids and pigments and hyper-hydrates the samples, and the second (known as Refractive Index Reagent, standard RIR, or Reagent 2 from CUBIC protocol), homogenizes the RI values throughout the sample. RI values only remain homogeneous for as long as the sample is kept in RIR, and immersion in any other reagents reverts transparency, requiring the bleaching and immunohistochemistry-immunofluorescence (IHC-IF) procedures to be carried out between LER and RIR.

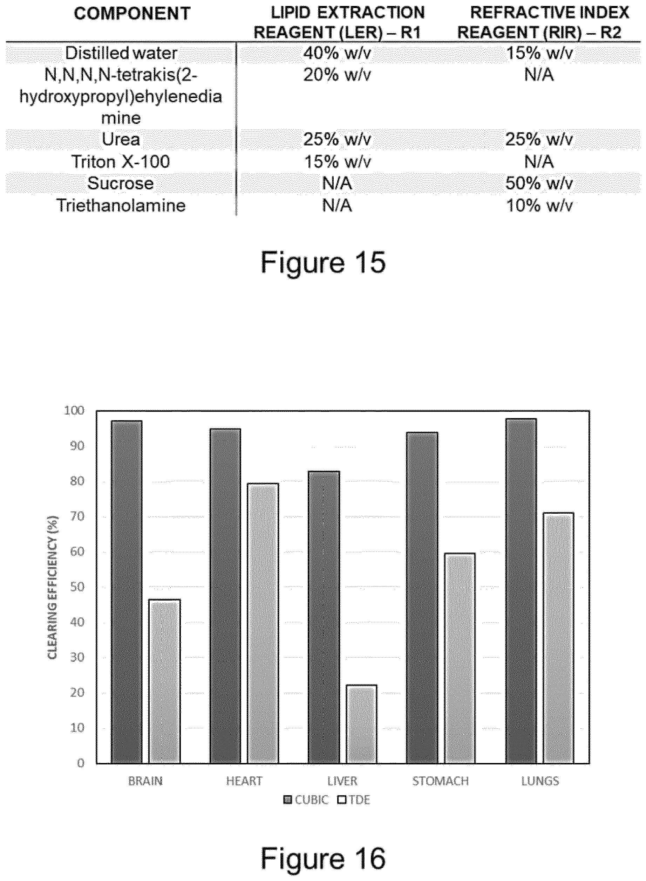

Standard LER and RIR from the CUBIC protocol were prepared following the original protocol; a summary of their compositions can be found in figure 15.

*Bleaching solution*

The hydrogen peroxide ($H_2O_2$)-based bleaching solution was prepared as reported to enable high bleaching efficiency and minimize damage to tissue morphology: 10% w/v concentration in PBS $1\times$ and incubation at 65°C in glass containers. $H_2O_2$ 30% w/v (Foret, Peroxfarma, Barcelona, Spain) was diluted with PBS to create a 10% w/v solution.

2.4.3 2,2'-thiodiethanol (TDE)

The 2,2'-thiodiethanol (TDE) clearing solution is a RIR, and as such, acts by homogenizing the RI values of the sample, and its effects are reverted once the sample is transferred to any other solution; thus, bleaching and IHC-IF procedures for SPIM 3D imaging were also carried out before incubation in TDE.

≥99% TDE (Sigma Aldrich, Merck KGaA, Darmstadt, Germany) was diluted with PBS $1\times$ to create solutions of different concentrations: 70% v/w, 80% v/w, 90% v/w and 97% v/w.

*Immunohistochemistry (Hematoxylin & Eosin)*

For the Hematoxylin & Eosin histological analysis, the samples were immersed in increasing concentrations of ethanol (70%-80%-90%) for 10 minutes each, then twice in isoparaffin for 60 minutes each, and twice in paraffin for 60 minutes, in order to embed them in a paraffin block and prepare them for microtome sectioning into 4-5$\mu$m slices and further standard H&E staining protocols.

*Immunofluorescence*

For the immunohistochemistry-immunofluorescence (IHC-IF) assays, the samples were incubated in 0.02 mg/mL anti-von Willebrand Factor (Factor VIII) primary antibody (Agilent, Santa Clara, CA, USA) in a shaker at 80 rpm at 37 °C for 4 days. The samples were washed 6 times with Triton X-100 0.1% in PBS $1\times$ (PBT 0.1%) to remove excess unbound antibodies, and then incubated in a mixture of 3.3 $\mu$g/mL of AlexaFluor 647 anti-rabbit secondary antibody (ThermoFisher Scientific, Waltham, USA) and 0.25 $\mu$g/mL of the cell nuclei marker 4',6-diamidino-2-phenylindole (DAPI) in a shaker at 80 rpm at 37 °C for 4 days. An extra washing step with 6 washes of PBT 0.1% was carried out after secondary antibody incubation to remove excess unbound antibodies.

These IHC-IF steps were carried out after incubation in LER but before incubation in TDE, due to the restrictions of the clearing process.

Sample property measurements

*Transparency*

The effect of the optical tissue clearing process on the samples was studied by calculating their attenuation coefficient ($\mu$) throughout the different stages of the clearing protocol. A higher attenuation coefficient corresponds to a higher sample opacity and to a lower light penetration.

The attenuation coefficient was calculated from the Beer-Lambert law equation:

$$I = I_0 e^{-\mu L}$$

Which results in:

$$\mu = \frac{ln\,^I/_{I_0}}{L}$$

Where:

- $I$ is the intensity of the light being transmitted through the sample.

- $I_0$ is the intensity of the incident light.

- $L$ is the thickness of the sample being traversed by the light.

Bright-field microscopy images of the samples were acquired to obtain the light intensity value $I$, as well as images of empty glass slides with no samples of them (keeping the same device parameters as the sample images) to obtain the incident light intensity $I_0$. The value of $L$ was measured using precision calipers at the imaging point on each sample.

The calculations were carried out through a MATLAB® script. 3 different images were acquired for each sample, and 5 different measurements were carried out on each image; the resulting measurements were all averaged to obtain a single average $\mu$ value for each sample.

*Fluorescence intensity*

The intensity of the specific fluorescence of both endogenous proteins (GFP, TdTomato) and exogenous fluorescent molecules (DAPI, AlexaFluor antibody-bound probes) was measured through the signal-to-background (SBR) ratio of fluorescence microscopy images of the samples.

The calculations were implemented as part of a MATLAB® script. This script applies a median filter to despeckle the image and applies a top hat filter to remove the background. It then segments the fluorescence signal by means of Otsu or Triangle methods and applies a combination of closing and opening morphological operations along with an area filter to remove small, noisy components, returning the average of the fluorescence signal. Autofluorescence is quantified as the mean intensity of the regions surrounding each detected fluorophore. The size of the neighborhood is given by the standard deviation of a gaussian filter, which is applied to the fluorescence image to diffuse each fluorophore and obtain its surrounding neighborhood. The resulting output is a single value for the ratio between the fluorophore's signal and the background noise/autofluorescence. Higher SBR values correlate to higher specific signal, whereas values approaching 1 mean little or no specific signal (e.g., due to fluorescence quenching or increase in background noise).

*Volume*

To measure sample volume before and after the clearing process had taken place, samples were placed on precision graph paper and adjusted to be as flat and uniform as possible, and pictures were acquired at the same distance and from the same angle with the aid of a camera support. Area in pixels was translated into real-world scale using the graph paper dimensions and was then multiplied by the height measurement obtained as part of the transparency measurement process to obtain an approximation of the volume. Previous pictures of the same organs were used as reference for placement and orientation to ensure consistency in measurements.

Imaging techniques

*Bright-field microscopy images*

Both transparency measurement images and H&E images were acquired with a Nikon Eclipse E800 (Nikon, Minato, Tokyo, Japan) bright-field microscope, with light coming from below, with a Nikon Plan UW 2× objective (NA: 0.06, WD: 7.5 mm) (Nikon, Minato, Tokyo, Japan) connected to a Nikon DXM1200F digital camera (Nikon, Minato, Tokyo, Japan) mounted above the sample.

*Confocal microscopy images*

High-resolution fluorescence microscopy images of the samples were acquired using a Leica TCS SPE inverted Confocal Microscope (Leica Microsystems, Germany) from the Confocal Microscopy Research Support Service (SAI) of the Hospital's Experimental Medicine and Surgery Unit (UMCE). Both ASC APO 10×/0.30 DRY and ACS APO 20×/0.60/IMM objectives were used for this purpose; the 20× objective required glycerol immersion of the glass slides carrying the samples.

*SPIM images*

3D Selective-Plane Illumination Microscopy (SPIM) images of the cleared samples were acquired using a custom-built SPIM device. This system uses mirrors and lenses to convert a laser beam of specific wavelength to a light sheet and guide it towards the sample (suspended in immersion media inside a glass cuvette), illuminating a single plane at a time for acquisition with an objective placed perpendicular to the plane.

The laser light sheet is focused onto the focal plane by an infinity-corrected 5× long working distance objective (NA: 0.14, WD: 34 mm, depth of focus (DF): 14 $\mu$m) (Mitutoyo Corporation, Japan). Image acquisition was carried out with a 2× objective (NA: 0.055, WD: 34 mm and DF: 91 $\mu$m) (Mitutoyo Corporation, Japan) and a 5× objective (NA: 0.055, WD: 34 mm and DF: 91 $\mu$m) (Mitutoyo Corporation, Japan) connected to a Neo 5.5 sCMOS camera (Andor, UK) with 2560 × 2160 active pixels and a physical pixel detector size of 6.5$\mu$m × 6.5$\mu$m.

*Image processing*

The images obtained during this project were examined and processed using the Fiji package based on the imaged Open-Source image processing software [3]. 3D volumetric rendering of SPIM-acquired image stacks was carried out with the 3DSlicer software [4].

Standard protocols

Reagent 1 (LER), also called R1 throughout the document, and Reagent 2 (RIR), also called R2 throughout the document, of the clearing protocol CUBIC_(clear, unobstructed brain/body imaging cocktails and computational analysis):

*CUBIC - Reagent 1 (R1) (50mL)*

- 22 mL of distilled water (35% by wt)
- 12.5 g of urea (25% by wt)
- 10 g of N, N, N', N'-tetrakis (2-hydroxy-propyl) ethylene diamine (25% by wt)

• 7.5 ml of Triton X-100 (15% by wt)

*CUBIC - Reagent 2 (R2) (50ml)*

• 7.5 mL of distilled water (15% by wt)
• 5 ml of triethanolamine (1% by wt)
• 25 g of sucrose (50% by wt)

12.5 g of urea (25% by wt)

**Results and discussion**

Example 1. TDE can function as a standalone clearing protocol in a selection of tissues

To evaluate whether TDE could be used as a simple single-step optical tissue clearing protocol, organs were cleared using TDE.

Opacity was reduced in all studied samples, and even though this reduction was inferior to the results of other established methods for whole organs, there was a reduction in protocol length and an increase in ease of application (see figure 16 and 17). Refraction Index matching alone is not enough to provide full transparency on most large-scale samples, therefore performing extra steps to remove lipids and pigments could be beneficial.

However, TDE-alone clearing was promisingly successful on thick human infant thymus. Samples were cleared overnight using TDE 80%, as preliminary tests had shown this concentration was the most likely to be effective on this kind of tissue; the result was successful and enough to allow for 3d image acquisition, and was similar to the result provided by CUBIC, with a significant boost to speed (7 days in CUBIC, compared to 1 day in TDE) and ease of use (Figure 18).

Thus, we conclude that while TDE may be successful as a standalone fast and simple clearing method for specific tissues or organs such as human infant thymus, most samples would preferably require further clearing actions.

Example 2. TDE can be used as an effective component for clearing biological samples.

It was examined whether TDE can be used as a replacement for RIR (R2) in the standard protocol, to take advantage of the benefits the former has over the latter as far as logistics and complexity of preparation and manipulation are concerned. For this purpose, organs were subjected to a LER-incubation step (R1), and then incubated with TDE 97%. Control samples were subjected to the CUBIC protocol to compare the results.

Both methods proved to be effective at rendering the samples reasonably transparent, with R1 + TDE showcasing similar-or-better results than CUBIC (R1 + R2), as shown in figures 19 and 20. No side effects or significant downsides or failures were observed, therefore confirming our hypothesis, and verifying that TDE can indeed act as an adequate main RI-matching agent in combination with a lipid extraction process.

This protocol was also applied to thick human infant thymus samples, resulting in a slightly higher clearing efficiency than TDE alone and on par with that of CUBIC (see figure 21), as in whole mice organs, supporting the concept of TDE as a simple and effective RI-matching agent.

The use of TDE as RI-matching clearing reagent is desirable due to its properties and the ensuing advantages it offers over other existing reagents for that purpose, such as CUBIC's own refractive index matching reagent 2 (See figure 31).

The main advantage showcased by TDE in this case is its reduced viscosity compared to the CUBIC RIR, which both increases the speed of reagent penetration into the samples (and thus the clearing speed) and makes it possible to implement injection and removal of TDE through automated or mechanical systems, which would otherwise be prone to clogging or low flow speeds.

Another advantage of TDE over similar reagents is the possibility to adjust its refractive index value by changing the concentration, allowing to tailor the specific RI values to different tissues and samples while maximizing the resulting transparency and/or fine-tuning the value for each imaging system's own optimal RI requirements.

Furthermore, using TDE shortens the total duration of the clearing protocol in 6 - 18 hours with respect to common clearing protocols that employ R2. For instance, for refractive index homogenization, incubation with R2 is between 12-24 h and with TDE is about 6 hours.

Last, but not least, preparation and storage of TDE is a very easy process, as it's a single commercially available reagent with a long shelf life which only needs to be diluted to the target concentration and does not precipitate when kept at low temperatures and does not require any complex preparation steps nor any special conservation procedures.

Example 3. Dilute $H_2O_2$ bleaching successfully removes pigments from all organs

All samples displayed a significant reduction in pigment presence after the bleaching protocol; this reduction was not limited to "pigmented" organs such as liver or kidneys, however, as all organs benefited from this bleaching step (see figure 22). No obvious structural alterations or damages were observed in any of the samples, despite the relatively high temperatures they were exposed to, as well as the action of the $H_2O_2$ itself.

Example 4. LER+ H$_2$O$_2$ +TDE is effective as a tissue clearing method

Having verified the possibility of using TDE as a RI-matching agent as well as applying dilute H$_2$O$_2$-based pigment bleaching to large size samples and whole organs, we moved on to integrating both improvements into a single customized protocol that also comprises a LER (R1).

The new protocol proved successful, as the bleaching step extracted the pigments and removed the tint from the samples without any negative effects on the clearing process as a whole and without impacting its duration or complexity, and TDE continued to be an efficient RI-matching agent (see figures 23 and 24).

Example 5. LER+ H$_2$O$_2$ +TDE has no significant adverse effects on tissue size and properties compared to CUBIC

CUBIC (R1 + R2) can have an engorging effect on certain samples, causing them to swell and increase in size; these changes are not considered to have an impact on results obtained from analysis of those samples, but are nevertheless a deviation from the original tissue's morphology. Experiments were carried out to check whether the clearing protocol of the invention would have any other impacts on sample size, structure and properties that could negatively impact any possible results.

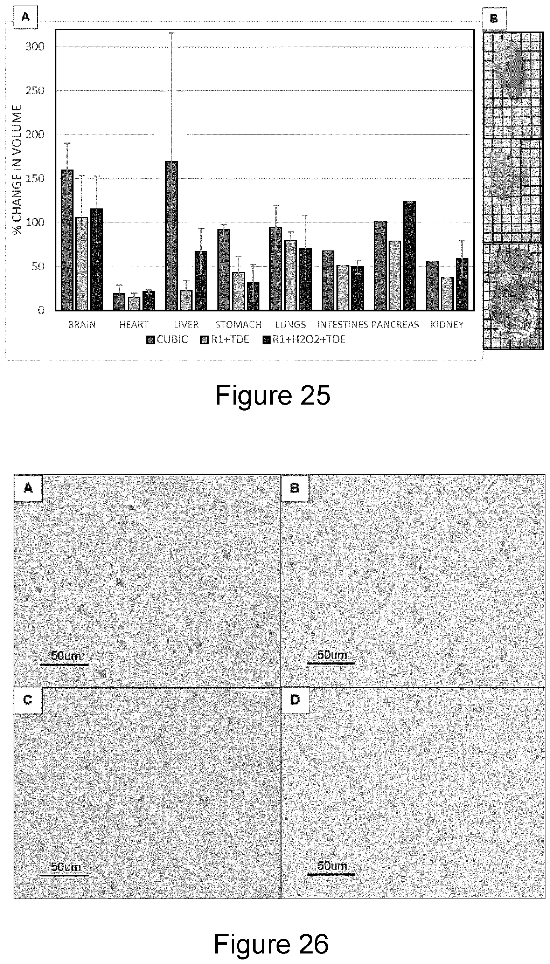

All the samples displayed the expected swelling during the LER (R1) incubation, with a resulting increase in volume compared to the original; nevertheless, samples seemed to shrink after the clearing protocol was complete, resulting in a slightly less drastic change in volume than expected overall (see figure 25). Upon further testing with brain samples, we verified that TDE does cause certain tissues to shrink although this effect is not as strong as the swelling impact of LER (R1) on those same samples (see figure 25 B).

The reason for this reduction is probably the following: TDE's clearing dynamics are governed by Fick's first law of diffusion, with larger concentration gradients between cells and the surrounding solution speeding up TDE's diffusion into the cell. However, they also speed up the outflow of water from the cells; as water is less dense and can diffuse more easily, these larger concentration gradients extract water faster than TDE itself diffuse into the cells. Thus, by the time an equilibrium is reached, a larger volume of solvent has left the cell than has entered it, causing a decrease in volume.

It is our belief that the reduction of volume induced by TDE counters the swelling effect caused by LER (R1), and therefore results in a less pronounced change in volume when compared to the original tissue, although this reduction may vary between organs. We did not observe any other major alterations to tissue volume or structure or any other effects that were not already described in the original CUBIC protocol.

It was also carried out conventional Hematoxylin & Eosin histological studies on the cleared brain samples, to verify the lack of any significant alterations to tissue structure or morphology that could negatively affect IHC assays and analysis.

Upon examination of the samples, no significant alterations were observed (see figure 26). The tissue seemed to remain unaltered between the samples and when compared to the control images, with the only difference in visualization being the intensity of the dyes; all samples incubated in LER (R1) showcased a loss of intensity, while those treated with H$_2$O$_2$ after LER (R1) seemed to recover part of the expected tint.

These results confirmed the preservation of tissue morphology throughout the H$_2$O$_2$ bleaching protocol, as well as the lack of negative effects of TDE on the same properties.

Example 6. LER+ H$_2$O$_2$ +TDE does not significantly quench or reduce IHC/IF fluorescent signal or alter tissue immunoreactivity

Experiments were carried out to check if TDE has a negative effect on fluorescent dyes and probes used in IHC/IF assays, as any negative impact on those would hinder the use of this modified clearing protocol for research and sample analysis.

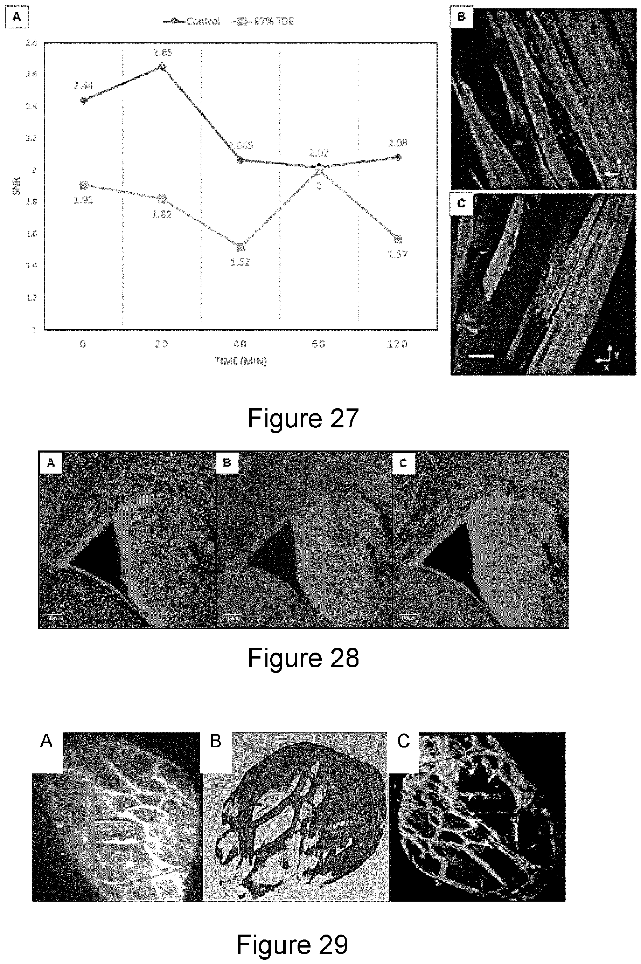

Mouse heart samples were cut into 200$\mu$m-thick slices and a IHC protocol was applied to label cell nuclei with the DAPI fluorescent dye and $\alpha$-actin present in the Z-disc of sarcomeres in cardiomyocytes with the AlexaFluor 488 IHC/IF probe; samples were then incubated in PBS and 97% TDE for 2 hours. No significant reductions in fluorescent signal were observed, and SBR values remained consistent throughout; DAPI visualization was unaltered as well (see figure 27).

Thus, we concluded that TDE does not seem to have any negative effects on signal from fluorescent dyes or commercial AlexaFluor IHC/IF probes.

Next, it was checked whether the combination of clearing and bleaching in the same protocol could influence the immunoreactivity of target proteins. Mouse brain samples were cleared with the LER (R1) + H$_2$O$_2$ + TDE protocol alongside an intermediate IHC step to label cell nuclei with the DAPI fluorescent dye and Sox2 (a neural stem cell marker) with the AlexaFluor 488 IHC/IF probe, and subsequently sliced into 1mm-thick pieces to acquire confocal microscopy images.

The IHC assay was successful, with Sox2+ cells being correctly labeled, and their presence found in relatively high numbers in one of the main NSC niches, the subventricular zone (SVZ). DAPI nuclear labeling was successful as well, with no major alterations or disturbances found throughout the whole sample (see figure 28).

Therefore, immunoreactivity and structure are indeed preserved by the clearing and bleaching protocol of the invention, and thus IHC/IF assays performed on samples cleared using this protocol would be valid for the purposes of any study or structural or functional analysis.

The same procedure was tested on larger-scale samples, to check whether there would be any effects on antibody penetration or performance and verify this tissue clearing protocol was compatible with IHC/IF on larger samples. This assay was successful as well, with brain samples being properly labelled to detect the mature neuron marker NeuN and the vascular endothelial marker CD31 (See figure 32)

Additionally, a lectin-based vasculature labelling method was applied in order to image the vascular network and check the potential interactions with the tissue clearing protocol. For this purpose, we applied a reduced LER (R1) + TDE clearing protocol to image large-size image stacks corresponding to large sample volumes. Hearts from animals subjected to the labelling protocol were immersed in LER (R1) for 3 days and subsequently washed and immersed in 85% TDE o.n. This assay was successful again, with the vasculature being clearly labelled and visible up to remarkable depths through the tissue, and with no evidence of ill-effects on the labelling.

Example 7. LER+$H_2O_2$+TDE can be used to clear whole mouse brains and apply SPIM 3D imaging techniques

An experiment was conducted to check whether samples cleared with the LER (R1) + $H_2O_2$ + TDE protocol could be successfully labelled using IHC/IF and then acquired with a SPIM 3D microscope to generate full 3d reconstructions of large tissue volumes.

Whole mouse brain was cleared following the LER (R1) + $H_2O_2$ + TDE protocol alongside an intermediate IHC step to label cell nuclei with the DAPI fluorescent dye and von Willebrand factor (a marker for vasculature) with the AlexaFluor 647 IHC/IF probe. Once cleared, samples were examined using the SPIM microscope, and several 3d stacks were acquired.

Yet again, immunoreactivity was properly preserved by the clearing and bleaching protocols, and both cell nuclei and vasculature could be observed using SPIM. SPIM microscopy itself was not negatively affected by the use of TDE either, with light penetration reaching deep into the sample as expected, therefore confirming the suitability of the LER (R1) + $H_2O_2$ + TDE protocol for use in this field of study. All of the signal present in the sample could be acquired flawlessly by SPIM (see figure 29).

Example 8. LER+$H_2O_2$+TDE does not negatively affect the mechano-elastic properties of the samples

The Brillouin spectroscopy images of samples treated with different optical tissue clearing conditions (including LER (R1) + $H_2O_2$ + TDE) did not showcase any major shifts in the location of the peaks in the spectra, thus pointing at the mechano-elastic properties of the tissue not having been altered significantly by the tissue clearing protocol.

On the other hand, samples that had undergone the full clearing process and thus had reduced their opacity provided much more defined peaks, increasing the reliability of the results they may bring and easing the analysis and interpretation of the data.

Example 8. LER + TDE does not cause crystallization.

Reflected light microscope images were obtained of mouse brain sections after clearing with different refractive index reagents. Figure 33 (a) and (b) show mouse brain sections cleared with a LER (Reagent 1 of the CUBIC protocol) and a RIR (reagent 2 of the CUBIC protocol), wherein (a) has been obtained without using the polarizer of the reflected light microscope and (b) has been obtained using the polarizer of the reflected light microscope. Figure 33 (c) and (d) show mouse brain sections cleared with a LER (Reagent 1 of the CUBIC protocol) and a RIR (TDE), wherein (a) has been obtained without using the polarizer of the reflected light microscope and (b) has been obtained using the polarizer of the reflected light microscope. The crystalline structures are only observed using the polarizer of the reflected light microscope. Otherwise, both samples look very similar, as visible in Fig. 33 (a) and (c).

It is noted that, as can be observed in figure 33, using Reagent 2 of the CUBIC protocol as RIR caused crystallization in the samples (Figure 33 (b)), whereas using TDE as RIR (Figure 33 (d)) did not cause crystallization. Crystallization can significantly impact the accuracy of optical microscopy and other measurement techniques by altering the sample's original structure. When a sample crystallizes, it can create artifacts that deviate from its true morphology, thus compromising the structural integrity. This is particularly problematic as it can lead to misinterpretations of the sample's properties and behavior under study. Moreover, crystallization can affect the sample's homogeneity and mechanical properties, making it difficult to obtain reliable data. Therefore, avoiding crystallization is crucial to maintain the fidelity of the observations and to ensure that measurements reflect the sample's authentic state.

**References**

[1] I. Nehrhoff etal., "3D imaging in CUBIC-cleared mouse heart tissue: going deeper," Biomed. Opt. Express, vol. 7, no. 9, p. 3716, Sep. 2016, doi: 10.1364/boe.7.003716.

[2] M. D. Muzumdar, B. Tasic, K. Miyamichi, N. Li, and L. Luo, "A global double-fluorescent cre reporter mouse," Genesis, vol. 45, no. 9, pp. 593-605, Sep. 2007, doi: 10.1002/dvg.20335.

[3] J. Schindelin et al., "Fiji: An open-source platform for biological-image analysis," Nature Methods, vol. 9, no. 7. pp. 676-682, 2012. doi: 10.1038/nmeth.2019.

[4] A. Fedorov et al., "3D Slicer as an image computing platform for the Quantitative Imaging Network," Magn. Reson. Imaging, vol. 30, no. 9, pp. 1323-1341, 2012, doi: 10.1016/j.mri.2012.05.001.

**Claims**

1. A system (100) comprising:

   i) a sample subsystem (1) comprising one or more sample containers (10);
   ii) a reagent subsystem (3) comprising one or more reagent containers (30);
   iii) one or more multi-channel subsystems (20) in fluid communication with the sample subsystem (1) and the reagent subsystem (3);
   iv) optionally, a waste disposal unit (14), preferably comprised in the sample subsystem (1);

   wherein at least one of the one or more reagent containers (30) of the reagent subsystem (3) comprises a Lipid Extraction Reagent (LER) and wherein, if the reagent subsystem (3) comprises more than one reagent containers (30), optionally at least one further reagent container (30) comprises one of the reagents from the list consisting of: a Fixative Reagent (FR), a Calcium Removal Reagent (CRR), a Bleaching Reagent (BR), a Labelling Reagent (LR) and a Refractive Index Reagent (RIR).

2. The system (100) according to claim 1, wherein the reagent subsystem (3) further comprises one or more reagent containers (30) comprising a RIR.

3. The system (100) according to claims 1 or 2, wherein the reagent subsystem (3) further comprises one or more reagent containers (30) comprising a BR.

4. The system (100) according to any of the previous claims, wherein the LER comprised in at least one of the reagent containers (30) of the reagent subsystem (3) comprises or consist of one or more of the reagents from the list consisting of: N,N,N,N-tetrakis(2-hydroxypropyl)ehylenediamine, Urea, Triton X-100, Methanol, Chloroform, Ethanol, Isopropanol, Hexane, Diethyl Ether, Acetone, Dichloromethane, Ethyl Acetate, Petroleum Ether, Toluene, Pyridine, Dioxane, Naphta, Xylene, Cyclohexane, Benzene, Dimethyl Sulfoxide (DMSO), Dimethyl Formamide (DMF), Methyl Ethyl Ketone (MEK), Tetrahydrofuran (THF) and Methyl tert-butyl ether (MTBE), preferably wherein the LER comprises or consists of at least one of N,N,N,N-tetrakis(2-hydroxypropyl)ehylenediamine, Urea and Triton X-100, more preferably wherein the LER comprises or consists of N,N,N,N-tetrakis(2-hydroxypropyl)ehylenediamine, Urea and Triton X-100.

5. The system (100) according to any of claims 2 to 4, wherein the RIR comprised in at least one of the reagent containers (30) of the reagent subsystem (3) comprises or consist of one or more of the reagents from the list consisting of: 2,2'-thiodiethanol (TDE), Glycerol, n-Butyl Alcohol, Benzyl Alcohol, Benzyl Benzoate and Methyl Salicylate, preferably wherein the RIR comprises or consists of TDE.

6. The system (100) according to any of claims 3 to 5, wherein the BR comprised in at least one of the reagent containers (30) of the reagent subsystem (3) comprises or consist of one or more of the reagents from the list consisting of: Hydrogen Peroxide ($H_2O_2$), Sodium Hypochlorite (NaClO), Potassium Permanganate (KMnO4), Sodium Borohydride, Oxalic Acid, Formic Acid, Chloral Hydrate, Ethanol, Acetic Acid, Calcium Hypochlorite, Phenol and Hydroquinone, preferably wherein the BR comprises or consists of $H_2O_2$.

7. The system (100) according to any of the previous claims, wherein the one or more multi-channel subsystems (20) comprise a multi-channel reagent selection subsystem (21) in fluid communication with the one or more reagent containers (30), and wherein the one or more multi-channel subsystems (20) comprise a multi-channel sample selection subsystem (23) in fluid communication with the one or more sample containers (10).

8. The system (100) according to any of the previous claims, wherein the one or more multi-channel subsystems (20) further comprise a multi-channel connecting subsystem (22) in fluid communication with the multi-channel reagent selection subsystem (21) and with the multi-channel sample selection subsystem (23).

9. The system (100) according to claim 8, wherein the system (100) further comprises a solvent reservoir (40) in fluid communication with the multi-channel connecting subsystem (22), preferably wherein the solvent reservoir (40) is at room temperature.

10. The system (100) according to any of the previous claims, wherein the system (100) further comprises a fluid pump (42), preferably wherein said fluid pump (42) is in fluid communication with the solvent reservoir (40) or with the multi-channel connecting subsystem (22).

**11.** The system (100) according to any of the previous claims, wherein the system (100) further comprises a temperature control unit for the sample subsystem (1), wherein the sample subsystem (1) is preferably thermally isolated and/or encased, more preferably wherein the sample subsystem (1) temperature is kept at about 37 degrees Celsius, and wherein the system (100) further comprises a temperature control unit for the reagent subsystem (3), wherein the re-agent subsystem (3) is preferably thermally isolated and/or encased, more preferably wherein the re-agent subsystem temperature is kept at about 4 degrees Celsius.

**12.** The system (100) according to any of the previous claims, wherein the system (100) further comprises a control unit with a processor and a memory comprising processor-executable instructions to operate the system (100), wherein the multi-channel subsystems (21, 22, 23, 24, 25, 26, 27, 28) are preferably controlled through level signal control or pulse signal control.

**13.** A kit of parts, wherein a first component of the kit comprises:

> i) a sample subsystem (1) comprising one or more sample containers (10);
> ii) a reagent subsystem (3) configured to accommodate one or more reagent containers (30);
> iii) one or more multi-channel subsystems (20) in fluid communication with the sample subsystem (1) and the reagent subsystem (3);
> iv) optionally, a waste disposal unit (14), preferably comprised in the sample subsystem (1);

and wherein a second component of the kit comprises the one or more reagent containers (30), wherein said reagent containers (30) comprise at least a Lipid Extraction Reagent (LER) and, optionally, the reagent subsystem (3) further comprises one or more reagent containers (30) comprising each one of the reagents from the list consisting of: a Fixative Reagent (FR), a Calcium Removal Reagent (CRR), a Bleaching Reagent (BR), a Labelling Reagent (LR) and a Refractive Index Reagent (RIR).

**14.** Computer executable program comprising processor readable instructions which, when the program is executed by a processor, cause the processor to operate the system (100) or the kit of parts according to any of the previous claims.

**15.** In vitro use of a system for tissue sample (12) clearing, wherein the system comprises:

> i) a sample subsystem (1) comprising one or more sample containers (10);
ii) a reagent subsystem (3) suitable for accommodating one or more reagent containers (30);
iii) one or more multi-channel subsystems (20) in fluid communication with the sample subsystem (1) and the reagent subsystem (3);
iv) optionally, a waste disposal unit (14), preferably comprised in the sample subsystem (1).

Figure 1

Figure 2

Figure 3

Chamber 3    T3 °C

Figure 4

Figure 5

Figure 6

Figure 7

EP 4 647 739 A1

| Method | Characteristic reagents | Species used for proof of concept | Reference |
|---|---|---|---|
| Unnamed | Glycerin, KOH | Mouse, goldfish, frog, lizard, rat | Green, 1952 |
| Unnamed | Fructose, glycerol | Organoids | Dekkers et al. 2019 |
| CUBIC-perfusion | Aminoalcohols, urea, glycerol | Whole mouse (neonatal and adult) | Tainaka et al., 2014 |
| ClearSee | Xylitol, sodium deoxiclorate, urea | Arabidopsis thaliana, Physcomitrella patens | Kurihara et al., 2015 |
| ClearT2 | Formamide, PEG | Mouse (whole embryos and dissected brains, E11-P0) | Kuwajima et al., 2013 |
| CUBIC | Aminoalcohols, urea, quadrol, THEED and many others | Mouse, marmoset | Susaki et al., 2014 |
| DEEP-Clear | CUBIC-based; acetone, H2O2, THEED | Many species | Pende et al., 2020 |
| FlyClear | Modified CUBIC | Drosophila | Pende et al., 2018 |
| FRUIT | Fructose, urea | Mouse | Hou et al., 2015 |
| IMES | Iohexol, MEA, TritonX-100, Sorbitol, EDTA | Mouse | Serizawa et al., 2019 |
| Scale | Urea+glycerol, TritonX-100 | Mouse | Hama et al., 2011 |
| SeeDB | Fructose | Mouse | Ke et al., 2013 |
| SeeDB2 | Fructose, omnipaque350, iohexol | Mouse | Ke et al., 2016 |
| RTF | Triethanolamine, formamide | Mouse | Yu et al., 2018 |
| 2ECi | 1-propanol+ECi | Organoids, Drosophila, zebrafish, axolotl, Xenopus | Masselink et al., 2019 |
| 3DISCO | THF, DCM, DBE | Mouse | Ertürk et al., 2012b |
| 3DISCO+Abs | THF, DCM, DBE | Mouse | Belle et al., 2014 |
| BABB (Murray's method) | Benzyl benzoate, methyl salicitate | Xenopus | Dent et al., 1989 |
| ECi | Ethanol, ECi | Mouse | Klingberg et al., 2017 |
| EyeDISCO | H2O2, light | Mouse, teleosts | Vigouroux et al., 2020 |
| EyeCi | H2O2, heat | Mouse | Henning et al., 2018 |
| FDISCO | THF, pH 9.5; DBE | Mouse, rat | Qi et al., 2019 |
| FluoClearBABB | Tert-butanol, BABB, pH 9.5 | Mouse | Schwarz et al., 2015 |
| iDISCO | Methanol, THF, DCM, DBE | Mouse | Renier et al., 2014 |
| iDISCO+ | Methanol, DCM, DBE | Mouse | Renier et al., 2016 |
| MSBB | Methyl salicitate, benzyl benzoate | Human, animals (many species) | Spalteholz 1914 |
| PEGASOS | Tert-butanol, PEG, quadrol | Mouse | Jing et al., 2018 |
| sDISCO | Stabilized solvents with propyl gallate: DBE, BABB | Mouse | Hahn et al., 2019 |
| SHANEL | CHAPS, NMDEA, EtOH, DCM, BABB | Human, pig | Zhao et al., 2020 |
| Unnamed | THF, DCM, BABB | Mouse | Ertrük et al., 2012b |
| Unnamed | THF+DBE | Mouse | Becker et al., 2012 |
| uDISCO | Tert-butanol, BABB, DPE | Mouse | Pan et al., 2016 |
| vDISCO | CUBIC1, EDTA, THF, BABB | Mouse | Cai et al., 2019 |

Figure 8

| Method | Characteristic reagents | Species used for proof of concept | Reference |
|---|---|---|---|
| Unknown | Chloral hydrate, chloroform | A. thaliana | Wuyts, N. et al. (2010) |
| Unknown | PFD, PP11 | A. thaliana | Littlejohn, G.R. et al. (2014) |
| Visikol | Confidential | Various | Villani, T.S. et al. (2013) |
| BABB | benzyl alcohol/benzyl benzoate (or Murray's clear) | A. thaliana, Medicago truncatula | Cabrera, J. et al. (2018) |
| Unknown | Methyl salicylate | Crassinucellate ovule | González-Gutiérrez, A.G. et al. (2020) |
| SeeDB | fructose, α-thioglycerol, NaOH, NaClO | Acer truncatum, Platanus occidentalis, Robinia pseudoacacia | Lu, L. et al. (2020) |
| TDE | 2,2'-thiodiethanol | A. thaliana | Musielak, T.J. et al. (2016) |
| iTOMEI | iohexol, caprylyl sulfobetaine | A. thaliana, Oryza sativa, Marchantia polymorpha | Sakamoto, Y. et.al. (2021) |
| ScaleP | urea, TritonX100 | Various | Warner, C.A. et al. (2014) |
| ClearSee | urea, sodium deoxycholate, xylitol | A. thaliana, Physcomitrella patens | Kurihara, D. et al. (2015) |
| ePro-ClearSee | Same as ClearSee | Various | Nagaki, K. et al. (2017) |
| ClearSeeAlpha | ClearSee + sodium sulphite | Vitis vinifera | Kurihara, D. et al. (2021) |

# Figure 9

| Clearing Protocol | Sample | Fluorescent Dye | Reference |
|---|---|---|---|
| 3DISCO | Mouse: Adult (early pregnancy and pseudopregnancy) | Immunostaining | Yuan et al., 2018 |
| iDISCO | Mouse: Embryo (E12.5-E18.5), young (4 weeks), adult (brain, kidney) | Immunostaining | Renier et al. 2014 |
| ClearT, ClearT2 | Mouse embryo | DiI, CTB, Hoechst | Kuwajima et al. 2013 |
| Scale | Mouse: brain, embryonic brain; human: brain | DiI, PP-BTA-1, PI | Hama et al. 2011 |
| ScaleS | Mouse: brain, embryonic brain; human: brain | DiI, PP-BTA-1, PI | Hama et al. 2015 |
| SeeDB | Mouse: brain, embryo | DiI | Ke et al. 2013 |
| CUBIC | Mouse: brain, heart, lung, kidney, liver, spleen, pancreas, intestine, stomach, muscle, skin, ear, whole body; marmoset: brain | PI, SYTO 16 | Susaki et al. 2015 |
| Pretreatment+CUBIC | Crustaceans: Pillbug (Armadillidium vulgare); Marine crab (Philyra Sp.) | Propidium Iodide | Konno and Okazaki, 2018 |
| 2ECi | Fruit fly (Drosophila melanogaster) | Immunostaining | Masselink et al., 2019 |
| DEEP-Clear | Bristle worm (Platynereis dumerilii) | immunostaining, EdU (Click chemistry), in situ hybridization | Pende et al., 2020 |
| EyeDisco, iDISCO+ | Bony fishes: Redeye piranha (Serrasalmus rhombeus); Australian lungfish (Neoceratodus forsteri), etc. | Immunostaining, Cholera toxin tracing (Alexa dyes) | Vigouroux et al., 2021 |
| PEGASOS | Mouse: Adult and neonatal | Immunostaining, Isolectin (Alexa dyes) | Jing et al., 2018 |

# Figure 10

| Reagents | Additional considerations | Originating protocol | Reference |
|---|---|---|---|
| Amino alcohols (Quadrol, THEED) | Used to remove heme from blood (hemoglobin) and muscle (myoglobin) | FlyClear | Pende M et al., 2018 |
| N-alkylimidazole | Effective at heme removal | CUBIC | Tainaka K. et al., 2018 |
| N-methyldiethanolamine (NMDEA) | Effective at heme removal | SHANEL | Zhao S., et al., 2020 |
| Hydrogen peroxide | Widely effective across many pigments | iDISCO | Renier N., et al., 2014 |

# Figure 11

| Time | Fluid Pump | Connection multi-channel subsystem | Reagent Selection Multi-channel Subsystem | Sample selection Multi-channel Subsystem | Process |
|------|-----------|-----------|-----------|-----------|---------|
| t1 | Withdraw | 1 | 1 | 1 | Load desired reagent volume from channel 1 |
| t2 | Infuse | 2 | 1 | 1 | Unload desired reagent volume to sample position 1 |
| t3 | off | 2 | 1 | 1 | Wait the desired reaction time |
| t4 | Withdraw | 2 | 1 | 1 | Empty the used reagent from sample position 1 |
| t5 | Infuse | 2 | 1 | 6 | Drive used reagent to waste |

# Figure 12

| Time | Fluid Pump | Connection multi-channel subsystem | Reagent Selection Multi-channel Subsystem | Sample selection Multi-channel Subsystem | Process |
|------|-----------|-----------|-----------|-----------|---------|
| t1 | Withdraw | 1 | 1 | 1 | Load desired reagent volume from channel 1 |
| t2 | Infuse | 2 | 1 | 1 | Unload desired reagent volume to sample position 1 |
| t3 | off | 2 | 1 | 1 | Wait the desired reaction time |
| t4 | Withdraw | 2 | 1 | 1 | Empty the used reagent from sample position 1 |
| t5 | Infuse | 2 | 1 | 2 | Drive used reagent to waste |

# Figure 13

| Time | Fluid Pump | Connection multi-channel subsystem | Reagent Selection Multi-channel Subsystem | Sample selection Multi-channel Subsystem | Sample disposal Multi-channel Subsystem | Process |
|------|-----------|-----------|-----------|-----------|-----------|---------|
| t1 | Withdraw | 1 | 1 | 1 | 6 | Load desired reagent volume from channel 1 |
| t2 | Infuse | 2 | 1 | 1 | 6 | Unload desired reagent volume to aample position 1 |
| t3 | off | 2 | 1 | 1 | 6 | Wait the desired reaction time |
| t4 | Withdraw | 2 | 1 | 1 | 1 | Empty the used reagent from sample position 1 |
| t5 | Infuse | 2 | 1 | 1 | 6 | Drive used reagent to waste |

# Figure 14

| COMPONENT | LIPID EXTRACTION REAGENT (LER) – R1 | REFRACTIVE INDEX REAGENT (RIR) – R2 |
|---|---|---|
| Distilled water | 40% w/v | 15% w/v |
| N,N,N,N-tetrakis(2-hydroxypropyl)ehylenedia mine | 20% w/v | N/A |
| Urea | 25% w/v | 25% w/v |
| Triton X-100 | 15% w/v | N/A |
| Sucrose | N/A | 50% w/v |
| Triethanolamine | N/A | 10% w/v |

## Figure 15

## Figure 16

Liver | Brain | Lungs | Stomach | Heart

## Figure 17

## Figure 18

Figure 19

Figure 20

Figure 21

Brain     Heart     Stomach     Lungs     Liver

Figure 22

Figure 23

Figure 24

Figure 25

Figure 26

Figure 27

Figure 28

Figure 29

Figure 30

| PROPERTY | TDE | R2 (CUBIC RIR) |
|---|---|---|
| Handling | Easy | Difficult (Viscous) |
| Clearing speed | Fast | Slow |
| Preparation | Simple | Complex |
| Refractive index value | Easily adjustable | Fixed |
| Long-term storage | Yes | No |
| Reusable | Yes (if properly filtered) | No |

Figure 31

Figure 32

Figure 33

Europäisches
Patentamt
European
Patent Office
Office européen
des brevets

# EUROPEAN SEARCH REPORT

**Application Number**

EP 24 38 2503

## DOCUMENTS CONSIDERED TO BE RELEVANT

| Category | Citation of document with indication, where appropriate, of relevant passages | Relevant to claim |
|---|---|---|
| X | US 2005/269315 A1 (VISINONI FRANCO [IT]) 8 December 2005 (2005-12-08) * paragraphs [0037] - [0043] * * paragraphs [0074] - [0084] * * paragraphs [0104] - [0105] * * figures 1-2 * | 1-15 |
| X | US 3 771 490 A (KINNEY T ET AL) 13 November 1973 (1973-11-13) * figures 1-10 * | 1,13-15 |
| X | US 2024/094098 A1 (OVEISI BEHROUZ [CA] ET AL) 21 March 2024 (2024-03-21) * figure 1 * | 1,13-15 |
| X | US 2010/112624 A1 (METZNER HOLGER [DE] ET AL) 6 May 2010 (2010-05-06) * figures 1-3 * | 1,13-15 |

**CLASSIFICATION OF THE APPLICATION (IPC)**

INV.
G01N1/31
G01N1/30
G01N35/10

**TECHNICAL FIELDS SEARCHED (IPC)**

G01N

The present search report has been drawn up for all claims

| Place of search | Date of completion of the search | Examiner |
|---|---|---|
| The Hague | 26 September 2024 | Sánchez Rivas, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2503

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | | Publication date | Patent family member(s) | | Publication date |
|---|---|---|---|---|---|
| US 2005269315 | A1 | 08-12-2005 | AT | E416368 T1 | 15-12-2008 |
| | | | EP | 1605243 A1 | 14-12-2005 |
| | | | US | 2005269315 A1 | 08-12-2005 |
| US 3771490 | A | 13-11-1973 | NONE | | |
| US 2024094098 | A1 | 21-03-2024 | CN | 116507899 A | 28-07-2023 |
| | | | EP | 4256301 A1 | 11-10-2023 |
| | | | JP | 2023551334 A | 07-12-2023 |
| | | | US | 2024094098 A1 | 21-03-2024 |
| | | | WO | 2022115933 A1 | 09-06-2022 |
| US 2010112624 | A1 | 06-05-2010 | DE | 102008054071 A1 | 12-05-2010 |
| | | | US | 2010112624 A1 | 06-05-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. NEHRHOFF et al.** 3D imaging in CUBIC-cleared mouse heart tissue: going deeper. *Biomed. Opt. Express*, September 2016, vol. 7 (9), 3716
- **M. D. MUZUMDAR** ; **B. TASIC** ; **K. MIYAMICHI** ; **N. LI** ; **L. LUO**. A global double-fluorescent cre reporter mouse. *Genesis*, September 2007, vol. 45 (9), 593-605
- **J. SCHINDELIN et al.** Fiji: An open-source platform for biological-image analysis. *Nature Methods*, 2012, vol. 9 (7), 676-682
- **A. FEDOROV et al.** 3D Slicer as an image computing platform for the Quantitative Imaging Network. *Magn. Reson. Imaging*, 2012, vol. 30 (9), 1323-1341